# EUROPÄISCHE PATENTSCHRIFT

(11) **EP 3 275 085 B1**
(45) Veröffentlichungstag und Bekanntmachung des Hinweises auf die Patenterteilung: **13.03.2019**
(21) Anmeldenummer: 16703259.8
(22) Anmeldetag: 05.02.2016
(51) Int. Cl.: H01Q 11/02, H04B 5/00, H01Q 13/26, H01Q 1/22

(54) **ANTENNE FÜR NAHBEREICHSANWENDUNGEN SOWIE VERWENDUNG EINER DERARTIGEN ANTENNE**
ANTENNA FOR SHORT-RANGE APPLICATIONS AND USE OF AN ANTENNA OF THIS TYPE
ANTENNE POUR APPLICATIONS EN CHAMP PROCHE ET UTILISATION D'UNE TELLE ANTENNE

(30) Priorität: 23.03.2015 DE 102015003784
(43) Veröffentlichungstag der Anmeldung: 31.01.2018
(73) Patentinhaber: Kilian, Dieter, 82140 Olching (DE)
(72) Erfinder: Kilian, Dieter, 82140 Olching (DE)
(74) Vertreter: Roos, Peter
(86) Internationale Anmeldenummer: PCT/EP2016/000192
(87) Internationale Veröffentlichungsnummer: WO 2016/150537

(56) Entgegenhaltungen:
- WO-A1-2014/041715
- DE-A1-102014 015 708
- US-A1- 2009 231 140
- US-A1- 2013 050 042

## Beschreibung

Die vorliegende Erfindung betrifft das Gebiet der Hochfrequenztechnik, insbesondere eine Antenne für Nahbereichsanwendungen wie z. B. RFID. Ferner betrifft die Erfindung ein Verfahren zum Betrieb einer derartigen Antenne und eine Verwendung einer derartigen Antenne.

Der Begriff "Nahbereichsanwendungen" im Sinne der Erfindung umfasst insbesondere Anwendungen, bei denen die Übertragung von elektromagnetischer Energie und/oder elektromagnetischen Signalen unter Verwendung der Antenne über Distanzen vorgesehen ist, die kleiner als 5 m, insbesondere kleiner als 1 m sind. Bevorzugt ist diese Distanz jedoch größer als 0,01 m, insbesondere größer als 0,05 m.

In der Veröffentlichung US 2013/0050042 A1 ist eine "Cobra-Antenne" beschrieben, die nach dem Prinzip einer Dipolantenne für das Fernfeld funktioniert, und aufweist: eine Übertragungseinheit, die einen Antennensignalspeisepunkt bildet; eine an einem Anschluss der Übertragungseinheit elektrisch angeschlossenes plättchenartiges λ/4-Antennenelement; und eine Koaxialleitung, deren Ende an dem anderen Anschluss der Übertragungseinheit elektrisch angeschlossen ist, wobei an der Koaxialleitung im λ/4-Abstand von deren Ende ein Ferritkern angeordnet ist.

Aus der Veröffentlichung US 2015/0235066 A1 sind verschiedene Ausführung von Antennen für Nahbereichsanwendungen wie RFID bekannt, welche auf dem Funktionsprinzip von "offenen Wellenleiterstrukturen" (Leckwellenleitungen) beruhen.

Aus der Veröffentlichung US 2009/0231140 A1 ist eine Antenne für RFID-Anwendungen bekannt, welche an oder in einem dielektrischen Substrat angeordnet aufweist: eine Streifenleitung (als "Signalleitungsabschnitt"), die an einem Ende mit einem RFID-Lesegerät und am anderen Ende mit Masse verbunden ist; und eine weitere Streifenleitung (als "Strahlungselektrode"), die von der ersten Streifenleitung beabstandet ist und zum Senden oder Empfangen eines Signals in einem bestimmten Band ausgebildet ist (z. B. mäanderförmig ausgebildet).

Es ist eine Aufgabe der vorliegenden Erfindung, in einfacher Weise eine drahtlose und zuverlässige Übertragung von Energie und/oder Information insbesondere über kurze Distanzen zu realisieren.

Diese Aufgabe wird gemäß eines ersten Aspekts der Erfindung durch eine Antenne gelöst, welche eine langgestreckte zweipolige Leiterstruktur mit einem Innenleiter und einem diesen koaxial umgebenden Mantelleiter (z. B. ein herkömmliches "Koaxialkabel") sowie eine an einem Längsende der Leiterstruktur angeordnete Abschlussstruktur umfasst, wobei die Abschlussstruktur umfasst:
- eine elektrisch isolierende Trägerplatte mit einer Oberseite und einer Unterseite,
- eine an der Oberseite der Trägerplatte über einen ersten Bereich der Trägerplatte sich erstreckende und mit dem Mantelleiter verbundene elektrisch leitfähige Mantelleiteranschlussfläche,
- eine an der Oberseite der Trägerplatte über einen vom ersten Bereich der Trägerplatte beabstandeten zweiten Bereich der Trägerplatte sich erstrekkende und mit dem Innenleiter verbundene elektrisch leitfähige Innenleiteranschlussfläche,
- eine an der Unterseite der Trägerplatte über einen dritten Bereich der Trägerplatte sich erstreckende elektrisch leitfähige Koppelleiterfläche, wobei der dritte Bereich den ersten Bereich und den zweiten Bereich der Trägerplatte jeweils wenigstens teilweise überlappt und zwischen der Koppelleiterfläche und der Mantelleiteranschlussfläche eine kapazitive Kopplung realisiert ist,
- wenigstens eine Durchkontaktierung, welche die Innenleiteranschlussfläche an der Oberseite der Trägerplatte mit der Koppelleiterfläche an der Unterseite der Trägerplatte verbindet.

Langgestreckte zweipolige Leiterstrukturen mit einem Innenleiter und einem diesen koaxial umgebenden Mantelleiter sind aus der Hochfrequenztechnik zur Weiterleitung hochfrequenter Signale aus dem Stand der Technik wohlbekannt (z. B. als herkömmliches "Koaxialkabel").

Derartige bekannte Koaxialleiterstrukturen werden "korrekt" so abgeschlossen ("terminiert"), dass an dem betreffenden Längsende eine Abschlussimpedanz (z. B. 50 Ω-Widerstand) einerseits mit dem Mantelleiter und andererseits mit dem Innenleiter elektrisch verbunden wird, wobei die damit gebildete herkömmliche Abschlussstruktur innerhalb des vom Mantelleiter umgrenzten Bereiches liegt, so dass die koaxiale Struktur nicht unterbrochen wird bzw. die abschirmende Wirkung des Mantelleiters ("Faradayscher Käfig") auch am Abschlussende erhalten bleibt. Wenn an dem entgegengesetzten Längsende der Leiterstruktur ein hochfrequentes (HF)-Signal (zwischen Innenleiter und Mantelleiter angelegt) eingespeist wird, so fließt ausgehend von dem ersten Ende bzw. "Anschlussende" ein HF-Wechselstrom zum zweiten Ende bzw. "Abschlussende", wobei dem Mantelleiter ein zum Innenleiterstrom beitragsgleicher Strom aufgeprägt wird, der jedoch entgegengesetzt fließt. Dieser "Rückstrom" besitzt auf Grund des Skineffekts nur eine geringe Eindringtiefe im Mantelleiter und dringt auf Grund der vom Mantelleiter gebildeten elektrisch leitfähigen Abschirmung an keiner Stelle nach außen.

Ganz anders verhält es sich jedoch bei dem erfindungsgemäßen Abschluss der koaxialen Leiterstruktur durch eine Trägerplatte mit den wie oben beschriebenen elektrisch leitfähigen Flächen und der wenigstens einen Durchkontaktierung.

Durch diese Gestaltung wird am zweiten Ende (Abschlussende) die koaxiale Struktur unterbrochen (was nach dem Stand der Technik von Koaxialleitungen stets vermieden ist). Durch die "Öffnung des Mantels" eröffnet sich dem aufgeprägten Rückstrom auf der Innenseite des Mantelleiters ein zusätzlicher Rückstrompfad entlang der Außenseite des Mantelleiters. Der Skineffekt erlaubt nun, dass beide Störme (an der Innen- und Außenseite des Mantelleiters) fließen können, ohne den Mantelleiter vollständig zu durchfluten. Überraschenderweise kann ein "Außenstrom" auf dem Mantelleiter nun phasengleich mit dem ursprünglichen "Signalstrom" im Innenleiter erzielt werden. Es ist gewissermaßen so, als ob ein Signalstrom direkt an der Außenseite des Mantelleiters angeschlossen wäre. Da die beiden Ströme (im Innenleiter und auf der Außenseite des Mantelleiters) gleichphasig sind, kann man auch von einer Gleichtaktkopplung sprechen. Vorteilhaft kann mit der erfindungsgemäßen Abschlussstruktur insbesondere eine Betriebsweise realisiert werden, bei welcher der Stromfluss auf der Außenseite des Mantelleiters maximiert wird, so dass im Idealfall neben Phasengleichheit auch zumindest annähernd Betragsgleichheit besteht. Der "auf die Außenseite des Mantelleiters umgeleitete HF-Wechselstrom" kann im Sendemodus der Antenne sich als Oberflächen- bzw. Mantelwelle entlang der koaxialen Struktur, ausgehend von dem zweiten Ende bzw. Abschlussende zurück in Richtung des ersten Endes ausbreiten und insbesondere ein relativ stark um den Mantelleiter herum konzentriertes elektromagnetisches Feld ausbilden, welches vorteilhaft für eine drahtlose Übertragung von Energie und/oder Information genutzt werden kann. Sofern bei dieser Betriebsweise im Wesentlichen keine Ablösung von elektromagnetischen Wellen vom Mantelleiter erfolgt, liegt ein so genannter "coupled mode" vor.

Umgekehrt können mit der erfindungsgemäßen Antenne auch elektromagnetische HF-Signale empfangen werden, welche nämlich auf der Außenseite des Mantelleiters Oberflächenwellen hervorrufen, welche wiederum dazu führen, dass ein Antennenempfangssignal am ersten Ende der koaxialen Leiterstruktur erhältlich ist. Hinsichtlich des Betriebs der erfindungsgemäßen Antenne ist demnach gemäß einer Ausführungsform vorgesehen, dass ein erstes Ende der Leiterstruktur als Anschlussende zum Anschluss eines Senders und/oder Empfängers für ein mit der Antenne zu sendendes bzw. ein von der Antenne zu empfangendes Antennensignal vorgesehen ist, wobei die Abschlussstruktur an einem dem ersten Ende entgegengesetzten zweiten Ende der Leiterstruktur angeschlossen ist.

Mit dem erfindungsgemäßen, relativ einfachen Aufbau lassen sich insbesondere vorteilhaft breitbandige koaxiale Wanderwellen-Antennen für Nahbereichsanwendungen realisieren.

Der Begriff "Wanderwelle" bezieht sich hierbei auf einen im Rahmen der Erfindung bevorzugten, oben bereits erwähnten Betriebsmodus der Antenne, bei welchem z. B. beim Senden ausgehend vom zweiten Ende der koaxialen Leiterstruktur elektromagnetische Wellen entlang der Leiterstruktur in Richtung zum ersten Ende der Leiterstruktur hin zurücklaufen. Bei dieser Funktionsweise der Antenne wird im Sendemodus, d. h. bei Einspeisung eines hochfrequenten Sendesignals am Anschlussende (erstes Ende) das am ersten Ende der Leiterstruktur, zwischen Innenleiter und Mantelleiter angelegte und somit eingespeiste Sendesignal im Prinzip wie bei einer herkömmlichen "Koaxialleitung" entlang der koaxialen Leiterstruktur zu deren zweiten Ende hin übertragen. Die durch das zweite Ende geschaffene Diskontinuität der Leiterstruktur in Verbindung mit der Ankopplung des Innenleiterendes über die Abschlussstruktur an den Mantelleiter bewirkt das erwähnte Zurücklaufen von elektromagnetischen Oberflächenwellen entlang der Leiterstruktur (an der Außenseite des Mantelleiters) in Richtung des ersten Endes der Leiterstruktur.

Für viele interessante Anwendungen ist es hierbei von Vorteil, wenn die Antenne gewissermaßen konzentriert um sich herum ein elektromagnetisches Feld (Wanderwellen) aufbaut, aber nur sehr wenig oder überhaupt keine elektromagnetische Energie ausstrahlt (durch sich "ablösende" elektromagnetische Wellen), die Antenne also im erwähnten "coupled mode" betrieben wird.

Gemäß einer Ausführungsform einer "coupled mode"-Betriebsweise einer erfindungsgemäßen Antenne ist z. B. vorgesehen, dass im Sendemodus die auf Grund der Sendesignaleinspeisung am zweiten Ende der Leiterstruktur ankommende Energie zu mehr als 50 % als "an der Leiterstruktur gebundene" Wanderwelle ausgehend vom zweiten Ende (zurück in Richtung des ersten Endes) läuft. In diesem Fall wird demzufolge weniger als 50 % der am zweiten Ende ankommenden Energie als elektromagnetische Welle von der Antenne abgestrahlt.

Alternativ oder zusätzlich kann bei der "coupled mode"-Betriebsweise einer erfindungsgemäßen Antenne z. B. vorgesehen sein, dass im Sendemodus die auf Grund der Sendesignaleinspeisung am ersten Ende (Anschlussende) der Leiterstruktur eingespeiste Energie zu mehr als 40 % als an der Leiterstruktur gebundene Wanderwelle ausgehend vom zweiten Ende (zurück in Richtung des ersten Endes) läuft.

Die erfindungsgemäße Antenne besitzt eine langgestreckte Leiterstruktur. Diese Leiterstruktur kann starr oder flexibel sein. Auch ist es möglich, dass sowohl wenigstens ein starrer Abschnitt als auch wenigstens ein flexibler Abschnitt vorgesehen sind, aus welchen sich die Leiterstruktur zusammensetzt. Die Länge der langgestreckten Leiterstruktur kann z. B. um einen Faktor im Bereich von 10 bis 50.000 größer als eine (maximale) Querausdehnung (z. B. Durchmesser) der Leiterstruktur sein.

Die Länge der langgestreckten Leiterstruktur kann z. B. mindestens 0,05 m, insbesondere mindestens 0,1 m betragen. Besonders interessant sind jedoch Anwendungen, bei denen diese Länge wesentlich größer ist. Für die meisten Anwendungen ist es jedoch ausreichend, wenn diese Länge maximal 200 m, insbesondere maximal 100 m beträgt.

In einer Ausführungsform ist vorgesehen, dass die Länge der langgestreckten Leiterstruktur (oder die Länge eines weiter unten noch beschriebenen Signalsende/Empfangsabschnittes) mindestens das 2-fache, insbesondere mindestens das 5-fache der betriebsmäßig vorgesehenen Wellenlänge der erwähnten Wanderwellen beträgt.

In einer Ausführungsform ist vorgesehen, dass letztere Länge bei einer betriebsmäßig vorgesehenen Signalfrequenz von bis zu 1 GHz maximal das 500-fache, insbesondere maximal das 300-fache der dementsprechenden Wellenlänge ist. Für Betriebsfrequenzen von mehr als 1 GHz ist gemäß einer Ausführungsform vorgesehen, dass diese Länge maximal das 1.000-fache, insbesondere maximal das 500-fache der dementsprechenden Betriebswellenlänge der Wanderwellen ist.

Die erfindungsgemäße Antenne wird bevorzugt mit einer Betriebsfrequenz (Trägerfrequenz des Antennensignals im Sendemodus) im Bereich von 400 MHz bis 6 GHz verwendet. In einer Ausführungsform liegt die Betriebsfrequenz z. B. im Bereich von 860 bis 960 MHz (wie z. B. für viele RFID-Anwendungen üblich). In einer anderen Ausführungsform wird eine Betriebsfrequenz im Bereich von 1 bis 3 GHz, beispielsweise 2,4 GHz, verwendet.

Der Innenleiter und der Mantelleiter sind elektrisch leitend (z. B. aus Metall). Im einfachsten Fall besitzt der Innenleiter einen kreisrunden Querschnitt und der Mantelleiter einen kreisringförmigen Querschnitt.

Abweichend von kreisrunden Querschnittskonturen sind auch andere Querschnittskonturen für den Innenleiter und/oder den Mantelleiter möglich, beispielsweise rechteckige bzw. quadratische oder ovale Formen.

Der Innenleiter kann massiv oder als Hohlleiter ausgebildet sein.

Der Querschnitt des Innenleiters und/oder der Querschnitt des Mantelleiters sind über die Länge der Leiterstruktur betrachtet im einfachsten Fall einheitlich.

In Radialrichtung betrachtet zwischen Innenleiter und Mantelleiter kann eine elektrische Isolierung bzw. ein Dielektrikum (einschließlich z. B. Luft) angeordnet sein. Radial außerhalb des Mantelleiters, der wie der Innenleiter bevorzugt aus einem metallischen Material gebildet sein kann, ist bevorzugt eine elektrische Isolierung (z. B. aus Kunststoff) vorgesehen, nachfolgend auch als Außenschicht oder "Isoliermantel" bezeichnet.

Die Abschlussstruktur ist eine Struktur, die am zweiten Ende der Leiterstruktur angeordnet ist und sowohl mit dem Innenleiter als auch dem Mantelleiter in der oben beschriebenen Weise (mittels "Innenleiteranschlussfläche" und "Mantelleiteranschlussfläche") elektrisch verbunden ist. Die Abschlussstruktur dient im Sendemodus der Antenne zum "Auskoppeln" von Energie aus dem Innenleiter und "Einkoppeln" dieser Energie in den Mantelleiter (zwecks Erzeugung von zurücklaufenden Oberflächenwellen auf der Außenseite des Mantelleiters).

Nachfolgend werden hinsichtlich der Ausgestaltung der Abschlussstruktur vorteilhafte Ausführungsformen beschrieben.

In einer Ausführungsform ist vorgesehen, dass die Trägerplatte eine langgestreckte Form, insbesondere z. B. eine rechteckige Form, besitzt. Die Länge der Trägerplatte kann z. B. mindestens um einen Faktor 2 oder einen Faktor 3 größer als die Breite der Trägerplatte sein. Die Dicke der Trägerplatte (als Dielektrikum dienender, elektrisch nicht leitfähiger Bereich) kann z. B. im Bereich von 0,3 mm bis 2 mm liegen.

Die Längsrichtung einer langgestreckten Trägerplatte kann z. B. parallel bzw. in Fortsetzung einer Längsrichtung der Leiterstruktur im Bereich des Leiterstrukturendes vorgesehen sein.

In einer Ausführungsform ist vorgesehen, dass der erste Bereich (und dementsprechend die Mantelleiteranschlussfläche) wenigstens zum Teil benachbart einem ersten Längsende der Trägerplatte vorgesehen ist, wobei dieses erste Längsende der Trägerplatte bevorzugt im Bereich des bereits erwähnten "zweiten Endes" der Leiterstruktur bzw. sich an dieses zweite Ende der Leiterstruktur anschließend angeordnet ist, wohingegen ein zweites, dem ersten Längsende entgegengesetztes Längsende der Trägerplatte weiter weg vom zweiten Ende der Leiterstruktur angeordnet ist. Bevorzugt erstreckt sich der erste Bereich in Längsrichtung der Trägerplatte betrachtet allenfalls bis zur Mitte der Trägerplatte.

In einer Ausführungsform ist vorgesehen, dass der zweite Bereich (und dementsprechend die Innenleiteranschlussfläche) wenigstens zum Teil benachbart einem zweiten Längsende (entgegengesetzt zum ersten Längsende) der Trägerplatte vorgesehen ist.

In einer Ausführungsvariante ist der erste Bereich benachbart dem ersten Längsende und der zweite Bereich benachbart dem zweiten Längsende der Trägerplatte vorgesehen, wobei ein lichter Abstand zwischen diesen beiden Bereichen relativ groß ist, z. B. mindestens 50 % der Trägerplattenlänge ausmacht. Bei dieser Variante kann vorgesehen sein, dass am zweiten Ende der Leiterstruktur der Innenleiter aus dem Mantelleiterende heraustretend verlängert bis hin zum zweiten Bereich geführt ist, sei es einstückig (also z. B. gewissermaßen durch eine "Entfernung des Mantelleiters" über diesen Bereich oder durch eine am Ende des Innenleiters separat angefügte elektrisch leitfähige "Innenleitererweiterung" zur Überbrückung des genannten Abstandes.

In einer anderen Ausführungsvariante ist der erste Bereich benachbart dem ersten Längsende der Trägerplatte und der zweite Bereich nur zum Teil benachbart einem zweiten Längsende der Trägerplatte vorgesehen, wobei der zweite Bereich sich in Längsrichtung der Trägerplatte relativ weit erstreckt, so dass lediglich ein relativ kleiner lichter Abstand zwischen dem ersten und dem zweiten Bereich verbleibt, z. B. ein Abstand, der weniger als 10 % der Trägerplattenlänge ausmacht.

In einer Ausführungsform, welche auch der letztgenannten Ausführungsvariante Rechnung trägt, ist vorgesehen, dass der zweite Bereich wenigstens einen streifenförmig in einer Längsrichtung der Trägerplatte verlaufenden Streifenabschnitt aufweist. Die Länge des Streifenabschnittes beträgt bevorzugt mindestens 50 % der Trägerplattenlänge.

In einer Ausführungsform ist vorgesehen, dass der dritte Bereich (und dementsprechend die Koppelleiterfläche) wenigstens einen streifenförmig in einer Längsrichtung der Trägerplatte verlaufenden Streifenabschnitt aufweist.

Jeder der vorgenannten Streifenabschnitte kann im einfachsten Fall über die Längsrichtung der Trägerplatte betrachtet eine einheitliche Breite besitzen. In diesem Fall kann der betreffende Streifenabschnitt z. B. rechteckig sein. In einer anderen Ausführungsform ist vorgesehen, dass wenigstens ein Streifenabschnitt über die Längsrichtung der Trägerplatte betrachtet eine uneinheitliche Breite besitzt. In einer Weiterbildung ist die Streifenabschnittbreite über die Längsrichtung der Trägerplatte betrachtet monoton sich vergrößernd bzw. monoton sich verkleinernd.

In einer anderen Weiterbildung der Ausführungsform mit wenigstens einem Streifenabschnitt ist vorgesehen, dass wenigstens ein Streifenabschnitt über die Querrichtung der Trägerplatte betrachtet eine uneinheitliche Länge besitzt.

Insbesondere ist dies vorteilhaft für einen Streifenabschnitt des dritten Bereiches (Koppelleiterfläche), weil damit über die Querrichtung der Trägerplatte betrachtet eine "uneinheitliche Überlappungslänge" der Überlappung zwischen dem dritten Bereich und dem ersten Bereich realisiert werden kann, was in der Regel die beim Betrieb der Antenne nutzbare Bandbreite der zu sendenden bzw. empfangenden HF-Antennensignal erhöht.

Alternativ oder zusätzlich zu einer uneinheitlichen Länge der Koppelleiterfläche ist auch eine uneinheitlichen Länge der Mantelleiteranschlussfläche denkbar, um eine uneinheitliche Überlappungslänge zu bewerkstelligen.

In einer Ausführungsform ist vorgesehen, dass der dritte Bereich (Koppelleiterfläche) zumindest einen Großteil des zweiten Bereiches (Innenleiteranschlussfläche) überlappt.

Insbesondere kann vorgesehen sein, dass der dritte Bereich den zweiten Bereich vollständig überlappt und bevorzugt sogar nennenswert überragt.

Falls sowohl der zweite Bereich als auch der dritte Bereich jeweils aus (wenigstens) einem Streifenabschnitt gebildet sind, so überragt der dritte Bereich in Querrichtung bevorzugt über die gesamte Länge des zweiten Bereiches den zweiten Bereich.

In einer Ausführungsform ist vorgesehen, dass der Mantelleiter über einen in seiner Längsrichtung langgestreckten Kontaktbereich mit der Mantelleiteranschlussfläche verbunden (z. B. verlötet oder verschweißt) ist.

In einer Weiterbildung dieser Ausführungsform ist vorgesehen, dass im Kontaktbereich quer zu der Längsrichtung des Mantelleiters betrachtet (also insbesondere z. B. quer zur Längsrichtung der Trägerplatte betrachtet) eine Ausdehnung der Mantelleiteranschlussfläche größer als eine Ausdehnung des Mantelleiters ist. Damit wird vorteilhaft eine größere Toleranz im Fertigungsprozess bei dem Verbinden der Leiterstruktur mit der Abschlussstruktur ermöglicht.

In einer Ausführungsform ist vorgesehen, dass die Innenleiteranschlussfläche einen mit dem Innenleiter verbundenen Anschlussabschnitt und sich daran anschließend mehrere streifenförmige Verzweigungsabschnitte besitzt, die an ihren jeweiligen Enden über jeweils wenigstens eine Durchkontaktierung mit der Koppelleiterfläche verbunden sind.

In einer Weiterbildung dieser Ausführungsform besitzt die Innenleiteranschlussfläche zwei derartige streifenförmige (z. B. jeweils rechteckförmige) Verzweigungsabschnitte, die an ihren jeweiligen Enden z. B. über jeweils eine oder mehrere Durchkontaktierungen mit der Koppelleiterfläche verbunden sind. In einer alternativen Weiterbildung besitzt die Innenleiteranschlussfläche drei streifenförmige Verzweigungsabschnitte, die ebenfalls z. B. jeweils rechteckförmig verlaufen können und jeweils über eine oder mehrere Durchkontaktierungen mit der Koppelleiterfläche verbunden sein können.

Bei mehreren streifenförmigen Verzweigungsabschnitten können diese z. B. parallel zueinander verlaufen und/oder jeweils identisch zueinander formgestaltet vorgesehen sein. In einer Ausführungsform ist vorgesehen, dass die Koppelleiterfläche einen mit der wenigstens einen Durchkontaktierung verbundenen Anschlussabschnitt und sich daran anschließend mehrere streifenförmige Verzweigungsabschnitte besitzt, die zu voneinander separaten Bereichen einer Überlappung mit der Mantelleiteranschlussfläche verlaufen.

In einer Weiterbildung dieser Ausführungsform ist vorgesehen, dass die Koppelleiterfläche zwei Verzweigungsabschnitte besitzt. In einer anderen Weiterbildung besitzt die Koppelleiterfläche drei Verzweigungsabschnitte. Eine Mehrzahl von Verzweigungsabschnitten kann z. B. parallel zueinander und/oder mit zueinander identischer Formgestaltung vorgesehen sein.

In einer Weiterbildung der Ausführungsform, bei welcher die Koppelleiterfläche mehrere Verzweigungsabschnitte besitzt, ist vorgesehen, dass diese Verzweigungsabschnitte unterschiedlich lang sind, so dass die einzelnen Verzweigungsabschnitte "unterschiedliche Überlappungslängen" der Überlappung des dritten Bereiches mit dem ersten Bereich ausbilden. Alternativ zu einer Koppelleiterfläche mit mehreren, jedoch zusammenhängenden Verzweigungsabschnitten können bei der Abschlussstruktur auch mehrere voneinander separate, nebeneinander verlaufende Koppelleiterflächen vorgesehen sein.

In einer bevorzugten Ausführungsform ist in Längsrichtung der Leiterstruktur betrachtet im Abstand zum zweiten Ende der Leiterstruktur, beispielsweise am Außenumfang des Mantelleiters (z. B. einen Isoliermantel umgebend), eine Oberflächenwellendämpfungseinrichtung angeordnet.

Eine derartige Oberflächenwellendämpfungseinrichtung ist insofern vorteilhaft, als damit der Bereich der erwähnten "zurücklaufenden Wanderwellen" entlang der Leiterstruktur gut definiert begrenzt werden kann. Die Dämpfungseinrichtung dient dazu, die Energie eintreffender zurücklaufender Wanderwellen zumindest größtenteils zu absorbieren. In einer Ausführungsform weist die Dämpfungseinrichtung hierfür wenigstens einen Ferritring auf, welcher den Außenumfang des Mantelleiters umgibt. Insbesondere können auch mehrere Ferritringe in Längsrichtung der Leiterstruktur hintereinander angeordnet sein, welche (mit oder ohne gegenseitigen Abstand) jeweils den Außenumfang des Mantelleiters umgeben. In einer Weiterbildung ist der Ferritring (bzw. wenigstens einer von mehreren Ferritringen) verschiebbar an der Leiterstruktur angebracht.

Alternativ oder zusätzlich zu wenigstens einem den Mantelleiter umgebenden Ferritring kann die Oberflächenwellendämpfungseinrichtung auch als eine im Verlauf der langgestreckten zweipoligen koaxialen Leiterstruktur zwischengefügte Dämpfungseinheit umfassend ein Dämpfungsnetzwerk (aus kapazitiven und/oder induktiven und/oder resistiven Elementen) aufweisen.

In einer Ausführungsform umfasst die Oberflächenwellendämpfungseinrichtung eine Erdung des Mantelleiters. Eine solche Erdung kann z. B. über eine am Außenumfang des Mantelleiters angebrachte "Erdungsmanschette" bewerkstelligt werden. Eine solche Erdungsmanschette kann z. B. geteilt aus zwei Manschettenhälften ausgebildet sein, die zur Anbringung miteinander verbunden (z. B. verschraubt) werden.

Falls eine Oberflächenwellendämpfungseinrichtung vorgesehen ist, so wird damit die Gesamtlänge der koaxialen Leiterstruktur in einen zwischen dem ersten Ende der Leiterstruktur und der Dämpfungseinrichtung befindlichen "Signalleitungsabschnitt" und einen zwischen der Dämpfungseinrichtung und dem zweiten Ende der Leiterstruktur befindlichen "Signalsende/Empfangsabschnitt" unterteilt. In einer Weiterbildung der Erfindung ist vorgesehen, dass innerhalb des Signalsende/Empfangsabschnittes eine oder mehrere "Diskontinuitäten" (nennenswerte lokale Abweichungen eines für die Wanderwellen wirksamen Wellenwiderstandes) vorgesehen sind. Jede solche Diskontinuität kann z. B. ebenfalls durch einen Ferritring wie bereits beschrieben oder eine ähnliche Einrichtung implementiert werden. Der Vorteil dieser Weiterbildung besteht darin, dass damit die Ausbreitung der Wanderwellen entlang der Leiterstruktur in einer gewünschten Weise beeinflusst werden kann (etwa für eine "Wellenformung").

Bei einer relativ langen erfindungsgemäßen Antenne kann die Anordnung einer Oberflächenwellendämpfungseinrichtung insofern entbehrlich sein, als die vom zweiten zum ersten Leiterstrukturende zurücklaufenden Wanderwellen auf Grund des hierbei unvermeidlichen Intensitätsverlustes keine allzu große Intensität mehr besitzen, wenn diese in die Nähe des ersten Endes kommen. Auch in diesem Fall können jedoch die vorstehend erwähnten Diskontinuitäten, z. B. durch Ferritringe oder dergleichen implementiert, an einer oder mehreren Stellen im Verlauf der Antenne vorteilhaft sein, um die Wellenausbreitung gezielt zu beeinflussen.

Wie bereits erwähnt besteht eine bevorzugte Betriebsweise bzw. Verwendung einer Antenne der hier beschriebenen Art darin, diese als eine Wanderwellenantenne in einem "coupled mode" zu verwenden. Insbesondere dieses erfindungsgemäße Betriebsverfahren bzw. diese erfindungsgemäße Verwendung kann z. B. für eine Kommunikation mit in der Umgebung der Antenne befindlichen Transpondern (z. B. RFID-Transponder) und/oder für eine Kommunikation mit in der Umgebung der Antenne befindlichen Komponenten eines Computernetzwerkes vorgesehen sein.

In der "coupled mode"-Betriebsweise kann insbesondere eine Kommunikation nicht durch elektromagnetische Strahlung im engeren Sinne sondern durch eine Wellenkopplung mit innerhalb der Antennenreichweite befindlichen Systemen oder Einheiten erfolgen.

Alternativ oder zusätzlich zur drahtlosen Kommunikation kann auch eine drahtlose Energieversorgung solcher Systeme bzw. Einheiten (z. B. Sensoren, insbesondere "intelligente Sensoren") bewerkstelligt werden.

Ganz allgemein vorteilhafte Verwendungen der erfindungsgemäßen Antenne sind z. B. eine Informationsübertragung im Nahbereich; Funkanwendungen im Nahbereich und in Gebäuden und Fahrzeugen, z. B. Tunnelfunk; WLAN in Zügen, Flugzeugen, Fahrzeugen; RFID; Energieübertragung im Nahbereich, z. B. Aufladen von Akkus, drahtlose Energieversorgung von Funk-Sensoren, Smart-Phones etc.; Aufladen von E-Bikes, Elektroautos etc.

Gemäß eines weiteren Aspekts der Erfindung wird eine Antenne der hier beschriebenen Art als eine Kommunikationskomponente in einer größeren technischen Einrichtung integriert betrieben. Bei der technischen Einrichtung kann es sich z. B. um einen Schrank oder ein Regal (insbesondere z. B. Schrank oder Regal mit IT-Komponenten) oder ein anders Möbelstück, insbesondere zur Aufbewahrung von zu inventarisierenden Artikeln, handeln. Darüber hinaus kann es sich z. B. auch um Teile eines Gebäudes oder eines Fahrzeuges wie z. B. bestimmte Wände, Verstrebungen, Türen oder Türrahmen handeln. Die Antenne kann hierbei insbesondere für eine Kommunikation mit in der näheren Umgebung der Antenne befindlichen Transpondern (z. B. RFID-Transponder) verwendet werden, wobei derartige Transponder beispielsweise an Gegenständen vorgesehen sind, die im Bereich der betreffenden technischen Einrichtung gelagert oder bewegt (aus der technischen Einrichtung heraus oder in diese hinein) werden. Damit kann insbesondere eine Inventarisierung bewerkstelligt werden, d. h. die Erfassung von mit Transpondern versehenen Gegenständen (z. B. IT-Komponenten wie z. B Server, Switches etc.) mittels der Kommunikation zwischen der Antenne und den jeweiligen Transpondern. Die erfindungsgemäß bevorzugt geringe Reichweite dieser Kommunikation vermeidet hierbei vorteilhaft Fehlerfassungen.

Alternativ oder zusätzlich zu "Information speichernden" Transpondern können auch ein oder mehrere batterielose, über das Antennenfeld mit elektrischer Energie versorgte Sensoren (bzw. "mit Sensorik ausgestattete" Transponder) an der Antenne angeordnet sein. Damit können je nach Sensortyp prinzipiell beliebige physikalische Parameter entlang der Antenne detektiert werden.

Alternativ oder zusätzlich zur Anordnung derartiger Sensoren direkt an der Antenne können insbesondere z. B. passive Sensoren (die ihre elektrische Versorgung aus dem Antennenfeld erhalten) auch innerhalb der Antennenreichweite an bzw. in der technischen Einrichtung angeordnet sein. Auch die mit derartigen Sensoren erfassten Informationen können vorteilhaft in einfacher Weise mittels der Kommunikation durch die Antenne ausgelesen und nachfolgend ausgewertet werden.

Der Verlauf der Leiterstruktur bzw. eines Signalsende/Empfangsabschnittes der koaxialen Leiterstruktur einer z. B. in einer technischen Einrichtung integrierten Antenne kann z. B. geradlinig, oder aber mit wenigstens einem abgewinkelten Verlaufsabschnitt und/oder mit wenigstens einem gekrümmten Verlaufsabschnitt vorgesehen ist. Z. B. kann ein insgesamt meanderförmiger Verlauf vorgesehen sein.

Ein derartig komplexerer Verlauf (sei es z. B. zweidimensional oder dreidimensional) ermöglicht insbesondere bei sehr geringer Reichweite der Antenne eine gezielte Abdeckung desjenigen Bereiches, in welchem die Kommunikation und/oder Energieübertragung stattfinden soll. Insbesondere für komplex verlaufende Antennen mit großer Länge kann vorgesehen sein, dass die Antenne aus mehreren Teilstücken zusammengesetzt ist (z. B. mittels elektrischer Steckverbindungen). Auch können T-Stücke zum Einsatz kommen, um Abzweigungen im Verlauf der Antenne zu realisieren. So kann z. B. am Ende eines Signalleitungsabschnittes mittels eines Verteilerstücks eine Verzweigung in zwei oder mehr als zwei Signalsende/Empfangsabschnitte realisiert werden (an deren Enden jeweils eine Abschlussstruktur der hier beschriebenen Art angeordnet ist).

In einer Weiterbildung der Erfindung ist eine "modulare Bauweise" der Antenne vorgesehen, die insbesondere dadurch realisiert sein kann, dass im Verlauf vom ersten Ende der Leiterstruktur (Anschlussende) bis zum zweiten Ende der Leiterstruktur (Abschlussende) eine oder mehrere elektrische Kontaktierungen (z. B. Steck- und/oder Schraub-Verbindungen) vorgesehen sind, welche dementsprechend einzelne "Module" begrenzen, aus denen die Antenne zusammengesetzt ist.

In einer diesbezüglichen Ausführungsform ist vorgesehen, dass eine Oberflächenwellendämpfungseinrichtung der vorstehend bereits beschriebenen Art an einem oder an beiden ihrer Enden mit einer entsprechenden Anschlusseinrichtung (z. B. elektrischer Stecker oder dergleichen) ausgestattet ist. Alternativ oder zusätzlich kann eine solche Anschlusseinrichtung insbesondere auch am zweiten Ende der Leiterstruktur, zum Anschluss der die Trägerplatte umfassenden Abschlussstruktur, vorgesehen sein. Dementsprechend kann auch die Abschlussstruktur mit einer (Gegen-)Anschlusseinrichtung ausgestattet sein. Letztere (Gegen-)Anschlusseinrichtung kann z. B. durch eine Verlötung an der Mantelleiteranschlussfläche und an der Innenleiteranschlussfläche elektrisch und mechanisch an der Trägerplatte angebunden sein.

Ein gravierender Vorteil einer derartigen modularen Bauweise der Antenne besteht z. B. darin, dass zum Aufbau der Antenne teilweise herkömmliche und kommerziell bereits erhältliche Komponenten wie z. B. "Koaxialkabel" verwendet werden können, die zur erfindungsgemäßen Ausbildung einer Antenne lediglich noch mit den jeweils benötigten zusätzlichen Modulen zu ergänzen sind. Insbesondere kann ein herkömmliches Koaxialkabel verwendet werden, um die erfindungsgemäß vorgesehene Leiterstruktur zu bilden. Falls eine Oberflächenwellendämpfungseinrichtung vorgesehen ist, so kann diese z. B. durch ein entsprechendes Dämpfungsmodul gebildet werden, welches beiderseits mit herkömmlichen Koaxialkabeln ergänzt wird (z. B. über herkömmliche elektrische Steck/Schraubverbindungen), um durch die beiden Koaxialkabel einerseits den Signalleitungsabschnitt und andererseits den Signalsende/Empfangsabschnitt der Antenne zu realisieren.

Gemäß einer Weiterbildung ist vorgesehen, dass der Bereich des zweiten Endes der leiterstruktur und der Abschlussstruktur mit einer Abschirmstruktur (aus elektrisch leitfähigem, z. B metallischem Material) abgeschirmt ist, um eine elektromagnetische Abstrahlung aus diesem Bereich zu minimieren. Die Abschirmstruktur kann z. B. eine hohlzylindrische, an einem Ende geschlossene Form besitzen und gewissermaßen als "Abschirmtopf" am Antennenende aufgeschoben und fixiert (z. B. verklebt) sein.

Die Erfindung wird nachfolgend anhand von Ausführungsbeispielen mit Bezug auf die beigefügten Zeichnungen weiter beschrieben. Es stellen dar:
- Fig. 1: eine Draufsicht einer Abschlussstruktur für eine Antenne gemäß eines Ausführungsbeispiels,
- Fig. 2: eine Seitenansicht der Abschlussstruktur von Fig. 1,
- Fig. 3: eine Draufsicht einer mit der Abschlussstruktur von Fig. 1 und 2 gebildeten Antenne gemäß eines Ausführungsbeispiels,
- Fig. 4: eine Seitenansicht der Antenne von Fig. 3,
- Fig. 5: eine Draufsicht einer Antenne gemäß eines weiteren Ausführungsbeispiels,
- Fig. 6: eine Seitenansicht der Antenne von Fig. 5,
- Fig. 7: eine Draufsicht einer Abschlusstruktur gemäß eines weiteren Ausführungsbeispiels,
- Fig. 8: eine Draufsicht einer Abschlusstruktur gemäß eines weiteren Ausführungsbeispiels,
- Fig. 9: eine Draufsicht einer Abschlusstruktur gemäß eines weiteren Ausführungsbeispiels,
- Fig. 10: eine Draufsicht einer Abschlusstruktur gemäß eines weiteren Ausführungsbeispiels,
- Fig. 11: eine Draufsicht einer Abschlusstruktur gemäß eines weiteren Ausführungsbeispiels, und
- Fig. 12: eine Seitenansicht einer Antenne gemäß eines weiteren Ausführungsbeispiels.

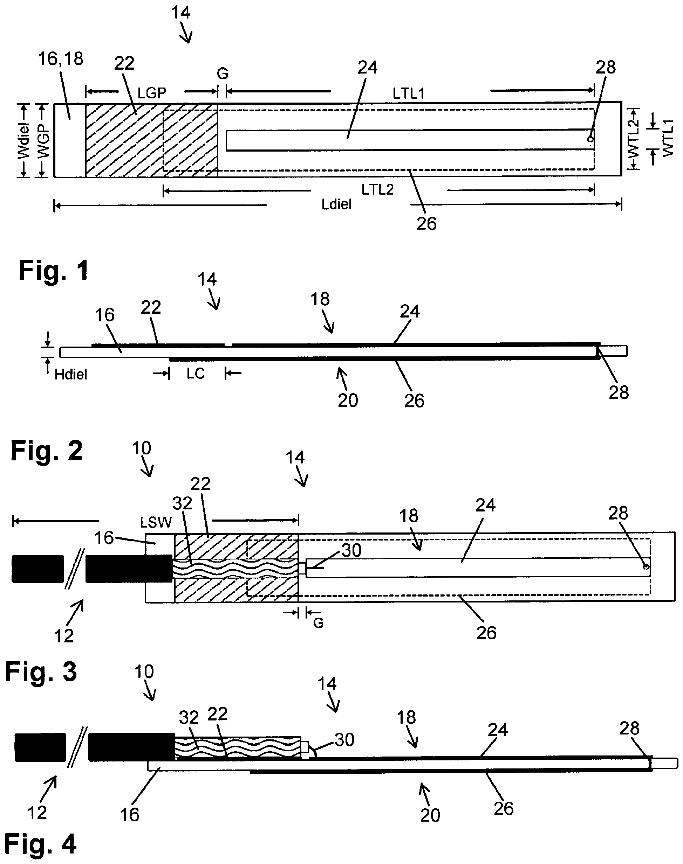

Die Fig. 1 und 2 zeigen ein Ausführungsbeispiel einer bei der vorliegenden Erfindung verwendbaren Abschlussstruktur 14, umfassend eine im dargestellten Beispiel rechteckige, elektrisch isolierende Trägerplatte 16 mit einer Oberseite 18 und einer Unterseite 20.

Die Abschlussstruktur 14 umfasst ferner eine elektrisch leitfähige Mantelleiteranschlussfläche 22 (in Fig. 1 schraffiert), die sich an der Oberseite 18 der Trägerplatte 16 über einen ersten Bereich der Trägerplatte erstreckt, eine elektrisch leitfähige Innenleiteranschlussfläche 24, die sich an der Oberseite 18 der Trägerplatte 16 über einen vom ersten Bereich der Trägerplatte 16 beabstandeten zweiten Bereich der Trägerplatte 16 erstreckt, eine elektrisch leitfähige Koppelleiterfläche 26 (in Fig. 1 gestrichelt), die sich an der Unterseite 20 der Trägerplatte 16 über einen dritten Bereich der Trägerplatte 16 erstreckt, wobei der dritte Bereich den ersten Bereich und den zweiten Bereich der Trägerplatte 16 jeweils überlappt.

Schließlich umfasst die Abschlussstruktur 14 eine Durchkontaktierung 28, welche die Innenleiteranschlussfläche 24 an der Oberseite 18 der Trägerplatte 16 mit der Koppelleiterfläche 26 an der Unterseite 20 der Trägerplatte 16 elektrisch verbindet. Abweichend davon könnten auch mehrere Durchkontaktierungen zur Verbindung der Innenleiteranschlussfläche 24 mit der Koppelleiterfläche 26 vorgesehen sein.

Im dargestellten Ausführungsbeispiel der Abschlussstruktur 14 besitzt die Trägerplatte 16 eine langgestreckt rechteckige Form. Die elektrisch leitfähigen Flächen 22, 24, 26 sind im dargestellten Beispiel in herkömmlicher Weise als Metallisierungsschichten (z. B. Kupferbeschichtung etc.) an der jeweiligen Seite 18 bzw. 20 der elektrisch isolierenden Trägerplatte 16 ausgebildet. Die Trägerplatte 16 kann z. B. aus einem für bedruckte Schaltungsplatten üblichen Material (z. B. Epoxidharz, Keramik etc.) gebildet sein.

Die elektrisch leitfähigen Flächen 22, 24, 26 sind im dargestellten Beispiel jeweils langgestreckt rechteckig ausgebildet.

In den Fig. 1 und Fig. 2 ist eine Bemaßung der Trägerplatte 16 und der Flächen 22, 24, 26 eingezeichnet. Hierbei bezeichnet:
- Ldiel:: Länge der Trägerplatte
- Wdiel:: Breite der Trägerplatte
- LGP:: Länge der Mantelleiteranschlussfläche
- WGP:: Breite der Mantelleiteranschlussfläche
- LTL1:: Länge der Innenleiteranschlussfläche
- WTL1:: Breite der Innenleiteranschlussfläche
- LTL2:: Länge der Koppelleiterfläche
- WTL2:: Breite der Koppelleiterfläche
- G:: Längsabstand zwischen Mantelleiteranschlussfläche und Innenleiteranschlussfläche
- Hdiel:: Dicke der Trägerplatte
- LC:: Überlappungslänge zwischen dem ersten Bereich (Mantelleiteranschlussfläche) und dem dritten Bereich (Koppelleiterfläche)

Hinsichtlich derartiger Abmessungen vorteilhafte "Dimensionierungsregeln" für dieses Ausführungsbeispiel (Fig. 1 und 2) und die weiteren Ausführungsbeispiele werden weiter unten noch angegeben.

Wie aus den Fig. 1 und Fig. 2 ersichtlich, überlappt der dritte Bereich (Koppelleiterfläche 26) den ersten Bereich (Mantelleiteranschlussfläche 22) nur teilweise, den zweiten Bereich (Innenleiteranschlussfläche 24) jedoch vollständig und diesen sogar überragend.

Die Fig. 3 und Fig. 4 zeigen ein Ausführungsbeispiel einer Antenne 10, umfassend die bereits beschriebene Abschlussstruktur 14 (Fig. 1 und 2) sowie eine an einem ersten Längsende der Abschlussstruktur 14 daran angeschlossene langgestreckte zweipolige Leiterstruktur 12 mit einem Innenleiter 30 und einem diesen koaxial umgebenden Mantelleiter 32 (in den Fig. 3 und Fig. 4 gewellt-schraffiert). Im einfachsten Fall handelt es sich bei der koaxialen Leiterstruktur 12 um ein herkömmliches "Koaxialkabel" ein derartiges herkömmliches Koaxialkabel besitzt wie in den Fig. 3 und 4 dargestellt außerdem noch eine elektrisch isolierende Zwischenschicht (z. B. aus Kunststoff) radial zwischen dem Innenleiter 30 und dem Mantelleiter 32 und eine elektrisch isolierende Außenschicht (z. B. aus Kunststoff) radial außerhalb des Mantelleiters 32.

Ein in den Figuren rechtes Ende des Mantelleiters 32 ist elektrisch mit der Mantelleiteranschlussfläche 22 verbunden und ein in den Figuren rechtes Ende des Innenleiters 30 ist elektrisch mit der Innenleiteranschlussfläche 24 verbunden (und überbrückt hierbei die Spaltlänge G). Jede dieser Verbindungen kann z. B. als Verlötung oder als Verschweißung ausgebildet sein.

Das rechte Ende des Innenleiters 30 ist bevorzugt in geringem Abstand zum linken Ende der Innenleiteranschlussfläche 24 an derselben angeschlossen (Abstand z. B. weniger als 5 % der Länge der Innenleiteranschlussfläche 24).

Für eine einfache Herstellbarkeit dieser elektrischen Verbindungen ist es bevorzugt, wie dargestellt, dass der Mantelleiter 32 in seinem Kontaktierungsbereich von der darüberliegenden Außenschicht befreit ist (bevorzugt über die gesamte Länge LGP) und der Innenleiter 30 in seinem Kontaktierungsbereich von den darüberliegenden Schichten (Zwischenschicht, Mantelleiter und Außenschicht) befreit ist.

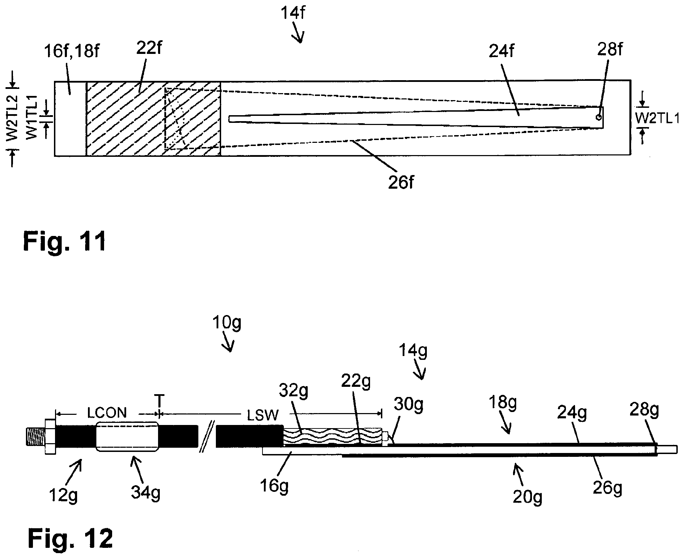

Die dargestellte Antenne 10 kann insbesondere für Nahbereichsanwendungen, beispielsweise RFID-Anwendungen oder kurzreichweitige Energieübertragungsanwendungen verwendet werden. Hierfür kann an einem ersten Ende (in den Figuren links) der Leiterstruktur 12 ein Sender und/oder Empfänger für ein mit der Antenne 10 zu sendendes bzw. ein von der Antenne 10 zu emfangendes Antennensignal vorgesehen und hierfür z. B. mit einem herkömmlichen "Koaxialstecker" versehen sein (Ein solcher Koaxialstecker ist z. B. in Fig. 12 ganz links zu erkennen). Über einen derartigen Anschluss wie einen Koaxialstecker kann das Antennensignal am ersten Ende der Leiterstruktur 12 (zwischen Innenleiter 30 und Mantelleiter 32 angelegt) eingespeist bzw. ausgespeist werden.

Ein zweites Ende (in den Figuren rechts) der Leiterstruktur 12 ist in der bereits beschriebenen Weise an der Abschlussstruktur 14 angeschlossen.

In einem Sendemodus der Antenne 10, wenn also am ersten Ende der koaxialen Leiterstruktur 12 ein zu sendendes Antennensignal eingespeist wird, läuft dieses Antennensignal entlang der Leiterstruktur 12 bis hin zum zweiten Ende (Abschlussende) mit der daran angeschlossenen Abschlussstruktur 14 und wird dort mehr oder weniger stark reflektiert, um als gebundene Wanderwelle (Oberflächenwelle) ausgehend vom zweiten Ende am Mantelleiter 32 entlang zurück in Richtung zum ersten Ende der Leiterstruktur 12 zu laufen.

Im Vergleich zu einer "korrekt abgeschlossenen Koaxialleiterstruktur" führt die in den Fig. 3 und 4 dargestellte, an ihrem zweiten Ende gewissermaßen "geöffnete Koaxialleiterstruktur" 12 mit unterbrochenem Masse-Strompfad zu einer "Umleitung" des elektrischen Rückstromes (Massestrom) auf die Außenseite der der koaxialen Abschirmung (= Mantelleiter 32) unter Umkehr der Fließrichung.

Bei entsprechend gewählter Betriebsweise, etwa hinsichtlich der Frequenz und Leistung des eingespeisten Antennensignals, lässt sich erreichen, dass die Antenne 10 ein elektromagnetisches Wechselfeld um sich herum aufbaut, aber relativ wenig abstrahlt. Vielmehr kann erreicht werden, dass die Antenne 10 als eine Wanderwellenantenne in einem "coupled mode" betrieben wird, um somit eine gute Kontrolle über die (bevorzugt relativ geringe) Reichweite der Antenne 10 zu besitzen.

In dieser Hinsicht vorteilhafte, bei der erfindungsgemäßen Antenne einzeln oder in beliebiger Kombination einsetzbare Details der Abschlussstruktur 14 sind z. B. folgende:
- Die Mantelleiteranschlussfläche 22 ist benachbart dem ersten Längsende (in den Figuren links) der Trägerplatte 16 vorgesehen und erstreckt sich in Längsrichtung über weniger als 30 % der Länge der Trägerplatte 16.
- Die Innenleiteranschlussfläche 24 ist als ein streifenförmig in der Längsrichtung der Trägerplatte 16 verlaufender Streifen ausgebildet, welcher über mehr als 50 % der Länge der Trägerplatte 16 verläuft. Eines der Enden dieses Streifens ist in relativ geringem Längsabstand G zur Mantelleiteranschlussfläche 22 angeordnet. Dieser Längsabstand G wird wie dargestellt durch einen Endabschnitt des Innenleiters 30 überbrückt und ist in diesem Beispiel kleiner als 5 % der Länge der Trägerplatte 16. Während dieses Ende des Streifens sich in einem linken bis mittleren Bereich der Trägerplatte 16 befindet, ist das entgegengesetzte Ende des Streifens in einem rechten Bereich und dort in relativ geringem Abstand zum zweiten Längsende der Trägerplatte 16 vorgesehen.

- Die Koppelleiterfläche 26 ist als ein in der Längsrichtung der Trägerplatte 16 verlaufender Streifen ausgebildet. Ein linkes Ende dieses Streifens überlappt die Mantelleiteranschlussfläche in Längsrichtung betrachtet über eine Länge im Bereich von bevorzugt 20 % bis 80 % der Länge LGP der Mantelleiteranschlussfläche 22. Insofern befindet sich das linke Ende der Koppelleiterfläche 26 nennenswert weiter links als das linke Ende der Innenleiteranschlussfläche 24. Die rechten Enden der Innenleiteranschlussfläche 24 und der Koppelleiterfläche 26 befinden sich in Längsrichtung betrachtet etwa an der gleichen Stelle.
- In Querrichtung der Trägerplatte 16 betrachtet befindet sich die Innenleiteranschlussfläche 24 etwa in der Mitte der Trägerplatte 16. Die Innenleiteranschlussfläche 24 wird beiderseits davon (in Querrichtung) von der Koppelleiterfläche 26 überragt. Die Koppelleiterfläche 26 ist mehr als doppelt so groß wie die Innenleiteranschlussfläche 24.
- Der Mantelleiter 32 ist über einen in seiner Längsrichtung langgestreckten Kontaktbereich mit der Mantelleiteranschlussfläche 22 verbunden (z. B. verlötet). Diese somit streifenförmige Verbindung (hier: Verlötung) verläuft über mehr als 20 % der Länge der Trägerplatte 16.
- In diesem Kontaktbereich quer zu der Längsrichtung des Mantelleiters 32 betrachtet, ist eine Ausdehnung der Mantelleiteranschlussfläche 22 mehr als doppelt so groß wie eine Ausdehnung des Mantelleiters 32.
- Das rechte Ende des Mantelleiters 32 ist in Längsrichtung der Trägerplatte 16 betrachtet etwa an derjenigen Stelle angeordnet, an welcher sich das rechte Ende der Mantelleiteranschlussfläche 22 befindet. Bei der Herstellung der Kontaktverbindung zwischen dem Mantelleiter 32 und der Mantelleiteranschlussfläche 22 wird bevorzugt so vorgegangen, dass das rechte Ende des Mantelleiters 32 allenfalls etwas nach links zurückversetzt gegenüber dem rechten Ende der Mantelleiteranschlussfläche 22 positioniert wird (also nicht in entgegengesetzter Richtung, nach rechts, das Ende der Mantelleiteranschlussfläche 22 überragend).

Abweichend vom dargestellten Beispiel gemäß der Fig. 3 und 4 könnten anstelle der Trägerplatte 16 auch zwei z. B. durch Abstandhalter parallel zueinander gehaltene Trägerplatten vorgesehen sein. In diesem Fall wird dann das zwischen ober- und unterseitigen Leiterflächen befindliche Dielektrikum teilweise durch Luft zwischen den beiden Leiterplatten realisiert.

Hochfrequenztechnisch betrachtet wird die Abschlussstruktur 14 bevorzugt so ausgebildet, dass damit ein bei der betreffenden Antennenbetriebsfrequenz möglichst verlustfreier Abschlusswiderstand realisiert wird.

Nochmals zurückkommend auf die in den Fig. 1 bis 4 angegebenen Abmessungen diverser Komponenten der Antenne 10 werden nachfolgend beispielhaft vorteilhafte Dimensionierungsregeln angegeben, die bei einer erfindungsgemäßen Antenne einzeln oder in beliebiger Kombination vorgesehen werden können:
- Ldiel(min) = (LGP + G + LTL1)
- Ldiel(max) = (LGP + G + LTL1) × i, mit 1 ≤ i ≤ 3
- Wdiel(min) = WTL2, oder Wdiel(min) = WGP falls WGP > WTL2
- Wdiel(max) = WTL2 × 1.5, oder Wdiel(max) = WGP × 1.5 falls WGP > WTL2
- 0.01 mm ≤ Hdiel ≤ 4 mm
- 0.5 × ∅koax ≤ Hdiel ≤ 5 × ∅koax, mit ∅koax = Durchmesser der Leiterstruktur
- LGP: ∅koax ≤ LGP ≤ 10 × ∅koax
- WGP = Wdiel oder WTL2 ≤ WGP ≤ WTL2 × j, mit 1 ≤ j ≤ 3
- 0.8 × ∅koax ≤ WGP ≤ 1.5 × ∅koax
- LTL1 wenigstens annähernd gleich (λ/8 - G - Via) × k, mit 0.5 ≤ k ≤ 2 und λ = Wellenlänge und Via = Länge (Höhe) der Durchkontaktierung
- 0.1 × WTL2 ≤ WTL1 ≤ WTL2
- Die Höhe (Dicke) der Innenleiteranschlussfläche entspricht wenigstens annähernd:
   - einer Querausdehnung (z. B. Durchmesser) des Innenleiters der koaxialen Leiterstruktur, und/oder
   - liegt im Bereich von 0.01 bis 0.4 mm, oder
   - liegt im Bereich von 0.5 bis 5 mm (insbesondere bei höheren Antennensignalleistungen, z. B. von wenigstens 100 W)
- LTL2 = (λ/8 - Via) × m, mit 1 ≤ m ≤ 2
- WTL2 > WTL1 (z. B. vorteilhaft, um eine höhere Bandbreite zu erzielen).
- WTL1 ≤ WTL2 ≤ 10 × WTL1
- Die Höhe (Dicke) der Koppelleiterfläche
   - liegt im Bereich von 0.01 bis 0.4 mm, oder
   - liegt im Bereich von 0.5 bis 5 mm (insbesondere bei höheren Antennensignalleistungen, z. B. von wenigstens 100 W)
- 0 ≤ LC ≤ 0.3 × LTL2

Insbesondere bei höheren Signalfrequenzen (z. B. ab 400 MHz) haben selbst geringe Leitungslängen im Millimeterbereich einen wesentlichen Einfluss auf das Frequenzverhalten (Impedanz) der Abschlussstruktur (14). Daher ist bevorzugt insbesondere auch z. B. die Länge (Via) der Durchkontaktierung (28) als auch der Spaltabstand (G) in die Dimensionierung der Antennenkomponenten mit einzubeziehen.

Bei dem Beispiel gemäß der Fig. 3 und 4 realisiert die Überlappung der Masseleiteranschlussfläche 22 und der Koppelleiterfläche 26 an dieser Stelle eine Kapazität. Im Fall einer Überlappungslänge LC = 0 wirken nur die Endkanten der Koppelleiterfläche 26 und der Masseleiteranschlussfläche 22 zur Ausbildung der Kapazität. Im Allgemeinen ist daher wie dargestellt LC > 0 zu bevorzugen. Nicht ausgeschlossen sei, dass im Überlappungsbereich außerdem wenigstens ein diskretes Bauteil (Kondensator) angeordnet ist, z. B. aufgelötet. Ein Anschluss dieses Bauteils wäre mit der Koppelleiterfläche 26, der andere mit der Masseleiteranschlussfläche 22 elektrisch leitend (z. B. über eine Durchkontaktierung verlötet) verbunden. Auch ist denkbar, im Verlauf der Innenleiteranschlussfläche und/oder der Koppelleiterfläche ein oder mehrere diskrete Bauteile (Induktivitäten wie z. B. Spulen) anzuordnen.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

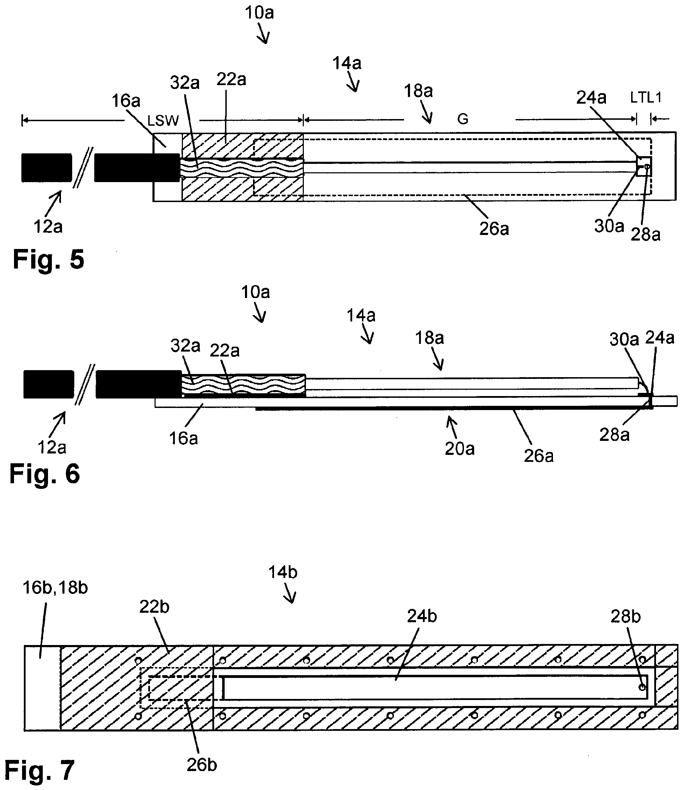

Die Fig. 5 und 6 zeigen eine Antenne 10a gemäß eines weiteren Ausführungsbeispiels. In Aufbau und Funktionsweise entspricht die Antenne 10a im Wesentlichen der bereits beschriebenen Antenne 10. Modifiziert ist lediglich die Innenleiteranschlussfläche und deren elektrische Verbindung mit der koaxialen Leiterstruktur. Bei der Antenne 10a ist eine Innenleiteranschlussfläche 24a nur benachbart dem zweiten Längsende der Trägerplatte 16 sich erstreckend vorgesehen, mit einer Längsausdehnung von weniger als 5 % der Länge der Trägerplatte 16 (unmittelbar im Bereich einer Durchkontaktierung 28a). Dementsprechend ist der Längsabstand G zwischen der Mantelleiteranschlussfläche 22a und der Innenleiteranschlussfläche 24a hier wesentlich größer (mehr als 50 % der Länge einer Trägerplatte 16a), wobei zur Überbrückung dieses Längsabstandes ein Innenleiter 30a einer Leiterstruktur 12a entsprechend weit nach rechts verläuft. Dieser das rechte Ende eines Mantelleiters 32a somit sehr weit überragende Endabschnitt des Innenleiters 30a ersetzt hier funktional betrachtet den langgestreckten Innenleiteranschlussstreifen des Ausführungsbeispiels gemäß der Fig. 3 und Fig. 4.

Die Fig. 7 bis 11 zeigen beispielhaft weitere Abschlussstrukturen, die z. B. in Verbindung mit einer Leiterstruktur der bereits beschriebenen Art (z. B. wie in den Fig. 3 und Fig. 4 dargestellt) eingesetzt werden können.

Fig. 7 zeigt eine Abschlussstruktur 14b, bei der eine Trägerplatte 16b und elektrisch leitfähige Flächen 22b, 24b, 26b ähnlich wie bei dem Beispiel gemäß der Fig. 1 und 2 vorgesehen sind, jedoch mit folgenden Modifikationen: Die Mantelleiteranschlussfläche 22b ist nicht nur benachbart dem ersten Längsende der Trägerplatte 14b vorgesehen, sondern umrahmt die Innenleiteranschlussfläche 24b an einer Oberseite 18b der Trägerplatte 16b. Eine weitere Modifikation besteht darin, dass an einer Unterseite 20b als elektrisch leitfähige Fläche nicht nur die Koppelleiterfläche 26b angeordnet ist, die hier z. B. dieselbe Breite wie die Innenleiteranschlussfläche 24b besitzt, sondern eine weitere, die Koppeleiterfläche 26b umrahmende Fläche. Letztere Fläche an der Unterseite 20b ist in etwa dekkungsgleich zu der an der Oberseite die Innenleiteranschlussfläche 24 umrahmende Mantelleiteranschlussfläche 22b vorgesehen (und lediglich am linken Ende entsprechend der Überlappung zwischen Koppeleiterfläche 26b und Mantelleiteranschlussfläche 22b etwas modifiziert).

Bei dem Beispiel gemäß Fig. 7 sind die Leiterflächen (bevorzugt an Ober- und Unterseite) nach dem Prinzip einer Coplanar-Leitung also (bevorzugt vollständig) mit Masseflächen umgeben, was vorteilhaft Abstrahlungen von elektromagnetischen Wellen über die Streifenleitungen 24b, 26b verhindert oder zumindest unterdrückt. Abweichend vom in Fig. 7 gezeigten Beispiel könnten die Streifenleitungen 24b, 26b auch mit voneinander verschiedenen Breiten ausgeführt werden.

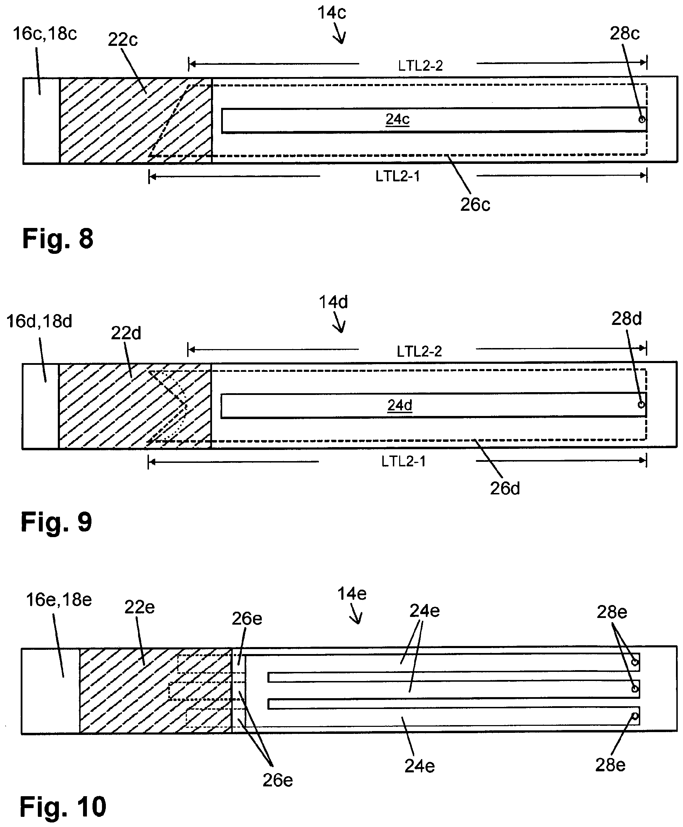

Fig. 8 zeigt eine Abschlussstruktur 14c gemäß eines weiteres Ausführungsbeispiels. Im Unterschied zu dem Beispiel gemäß Fig. 1 ist bei der Abschlussstruktur 14c die Länge einer Koppelleiterfläche 26c über die Querrichtung betrachtet nicht einheitlich sondern variiert, wobei in diesem Beispiel die Variation so vorgesehen ist, dass die Länge hierbei von einem lateralen Ende zum anderen lateralen Ende hin monoton abnimmt, so dass dementsprechend auch die "Überlappungslänge" zwischen der Koppelleiterfläche 26c und einer Mantelleiteranschlussfläche 22c über die Breite betrachtet nicht einheitlich ist, sondern ebenfalls monoton variiert. Im dargestellten Beispiel verläuft ein linkes Ende der Koppelleiterfläche 26 nicht wie bei dem Beispiel von Fig. 1 in Querrichtung der Trägerplatte, sondern in einem Winkel schräg zur Querrichtung. Dieser Winkel kann z. B. im Bereich von 10° bis 40° liegen. In Fig. 8 ist die "längste Länge" der Koppelleiterfläche 26c mit LTL2-1 und die "kürzeste Länge" der Koppelleiterfläche 26c mit LTL2-2 bezeichnet.

Diese Variation der Überlappungslänge vergrößert vorteilhaft die im Betrieb der Antenne nutzbare Signalbandbreite. Derselbe vorteilhafte Effekt ergibt sich auch bei den nachfolgend mit Bezug auf die Fig. 9 und Fig. 10 beschriebenen Ausführungen.

Fig. 9 zeigt eine Abschlussstruktur 14d gemäß eines weiteren Ausführungsbeispiels. Im Unterschied zu dem Beispiel gemäß Fig. 8 ist bei der Antenne 14d gemäß Fig. 9 eine Variation der "Überlappungslänge" zwischen einer Koppelleiterfläche 26d und einer Mantelleiteranschlussfläche 22d so vorgesehen, dass ausgehend von einem lateralen Ende die Überlappungslänge (bzw. auch die Länge der Koppelleiterfläche 26d) zunächst monoton abnimmt, um bis zum anderen lateralen Ende wieder monoton zuzunehmen. Mit anderen Worten ist das linke Ende der Koppelleiterfläche 26d im Überlappungsbereich eingebuchtet. Im dargestellten Beispiel ist diese Einbuchtung symmetrisch zu einer Längsmittellinie der Trägerplatte 16d, und besitzt z. B. geradlinig verlaufende Einbuchtungsflanken (wie in Fig. 9 gestrichelt eingezeichnet), oder alternativ z. B. eine bauchige, z. B. etwa halbkreisförmige Begrenzung (wie in Fig. 9 gepunktet eingezeichnet).

Fig. 10 zeigt eine Antenne 14e gemäß eines weiteren Ausführungsbeispiels. Im Unterschied zu dem Beispiel gemäß Fig. 1 sind bei der Antenne 14d eine Innenleiteranschlussfläche 24e und eine Koppelleiterfläche 26e modifiziert.

Die Innenleiteranschlussfläche 24e besitzt einen mit dem Innenleiter einer betreffenden koaxialen Leiterstruktur zu verbindenden Anschlussabschnitt und sich daran anschließend mehrere (hier drei) streifenförmige Verzweigungsabschnitte, die an ihren jeweiligen Enden über jeweils eine Durchkontaktierung 28e mit der Koppelleiterfläche 26e verbunden sind. Alternativ könnten an jedem Verzweigungsabschnitt auch mehrere Durchkontaktierungen vorgesehen sein.

Anstatt einer einzigen zusammenhängenden Koppelleiterfläche sind entsprechend der Anzahl an Verzweigungsabschnitten der Innenleiteranschlussfläche 24e, hier also drei Koppelleiterflächen 26e vorgesehen, die etwa deckungsgleich zu den Verzweigungsabschnitten der Innenleiteranschlussfläche 24e streifenförmig verlaufen, jedoch an deren linken Enden so verlängert sind, dass sich drei Überlappungsbereiche zur Überlappung mit einer Mantelleiteranschlussfläche 22e ergeben. Die hier drei Überlappungsbereiche sind mit drei verschiedenen Überlappungslängen vorgesehen. Dies ist durch voneinander verschiedene Längen der drei Koppelleiterflächen 26e realisiert.

Falls die Innenleiteranschlussfläche (z. B. die Innenleiteranschlussfläche 24e gemäß dieses Beispiels) mehrere gleich oder unterschiedlich lange streifenförmige Verzweigungsabschnitte besitzt (alternativ: mehrere voneinander separate "Einzelleiterflächen" aufweist), so ist die Breite der Masseleiteranschlussfläche (z. B. Masseleiteranschlussfläche 22e in diesem Beispiel) bevorzugt wenigstens annähernd gleich der Gesamtbreite der Innenleiteranschlussfläche(n). Die Breite der Spalte zwischen den Streifen der Innenleiteranschlussfläche (und/oder zwischen streifenförmigen Abschnitten der Koppelleiterfläche) kann z. B. im Bereich von 0,3 bis 5 mm gewählt sein.

Fig. 11 zeigt eine Abschlussstruktur 14f gemäß eines weiteren Ausführungsbeispiels. Im Unterschied zu dem Beispiel gemäß Fig. 1 sind bei der Abschlussstruktur 14f gemäß Fig. 11 eine Innenleiteranschlussfläche 24f und eine Koppelleiterfläche 26f modifiziert.

Die Innenleiteranschlussfläche 24f besitzt über die Längsrichtung einer Trägerplatte 16f betrachtet eine uneinheitliche Breite. Im dargestellten Beispiel nimmt diese Breite ausgehend vom linken Ende hin zum rechten Ende (bei einer Durchkontaktierung 28f) monoton zu. Im dargestellten Beispiel ist die Innenleiteranschlussfläche 24f trapezförmig als langgestreckter Streifen ausgebildet.

Die Koppelleiterfläche 26f besitzt über die Längsrichtung der Trägerplatte 16f betrachtet eine uneinheitliche Breite. Im dargestellten Beispiel nimmt diese Breite ausgehend vom rechten Ende (an der Durchkontaktierung 28f) nach links hin bis zum linken Ende (im Überlappungsbereich) monoton zu. Im dargestellten Beispiel ist die Koppelleiterfläche 26f trapezförmig.

Im dargestellten Beispiel enden die Innenleiteranschlussfläche 24f und die Koppelleiterfläche 26f in Längsrichtung der Trägerplatte 16f betrachtet nach rechts hin an der gleichen Stelle.

In Fig. 11 bezeichnen W1TL1 die "Anfangsbreite" der Innenleiteranschlussfläche 24f, W2TL1 die "Endbreite" der Innenleiteranschlussfläche 24f, und W2TL2 die "Endbreite" der Koppelleiterfläche 26f. Bevorzugt entspricht, wie bei diesem Beispiel ersichtlich, die Endbreite der Innenleiteranschlussfläche 24f der Anfangsbreite der Koppelleiterfläche 26f. Bevorzugt gilt ∅koax ≤ W1TL1. Des Weiteren sind z. B. folgende Substitutionen im Hinblick auf die oben bereits angegebenen Dimensionierungsregeln zweckmäßig: WTL1 → W2TL1, und WTL2 → W2TL2.

Das Beispiel gemäß Fig. 11 kann auch dahingehend abgewandelt werden, dass die "Längenvariation" wie bereits für die Beispiele der Fig. 8 und 9 beschrieben eingesetzt wird, also eine über die Breite der Koppelleiterfläche 26f betrachtet uneinheitliche Länge der Koppelleiterfläche 26f (vgl. in Fig. 11 strichpunktiert und gepunktet eingezeichnete beispielhafte Begrenzungen der Koppelleiterfläche 26f), um eine noch größere Bandbreite zu erzielen.

Fig. 12 zeigt eine Antenne 10g gemäß eines weiteren Ausführungsbeispiels. In Aufbau und Funktionsweise entspricht die Antenne 10g, gebildet aus einer Leiterstruktur 12g und einer daran angeschlossenen Abschlussstruktur 14g im Wesentlichen der bereits beschriebenen Antenne 10 gemäß der Fig. 3 und Fig. 4. Modifiziert ist lediglich die Leiterstruktur 12g dahingehend, dass in Längsrichtung der Leiterstruktur 12g betrachtet zwischen den beiden Enden der Leiterstruktur 12g, eine Oberflächenwellendämpfungseinrichtung, hier in Form eines am Außenumfang des Mantelleiters 32g (eine isolierende Außenschicht umgebend) angeordneten Ferritringes 34g ausgebildet ist.

Der Ferritring 34g ist insofern vorteilhaft, als damit der Bereich der "zurücklaufenden Wanderwellen" entlang der Leiterstruktur 12g gut definiert begrenzt werden kann. Durch den Ferritring 34g (oder abweichend von diesem Beispiel durch irgendeine andere Oberflächenwellendämpfungseinrichtung an dieser Stelle) wird eine Gesamtlänge der Leiterstruktur 12g in einen "Signalleitungsabschnitt" und einen "Signalsende/Empfangsabschnitt" unterteilt. In Fig. 12 ist die Länge des Signalleitungsabschnittes mit LCON und die Länge des Signalsende/Empfangsabschnittes mit LSW bezeichnet.

Ganz allgemein kommen unterschiedliche Möglichkeiten der Oberflächenwellendämpfung in Betracht, z. B.:
- Ohne Unterbrechung der Leiterstruktur (z. B. Koaxialkabel): Mittels eines oder mehrerer Ferritringe, die die Leiterstruktur mehr oder weniger eng umschließen. In Fig. 12 ist lediglich ein Ferritring (Ferritring 34g) exemplarisch dargestellt. An der Stelle T in Fig. 12 geht dadurch z. B. ein herkömmliches Koaxialkabel in eine Oberflächenwellen-Leitung über.
- Mit Unterbrechung der Leiterstruktur: Durch Einfügen eines Gleichtaktfilters (z. B. "Common Mode Line Filter") z. B. auf einem Schaltungsträger wie z. B. einer gedruckten Platine.
- Galvanische Erdung des Mantelleiters (z. B. durch metallische Mantelschelle).

Die bei dem Beispiel von Fig. 12 beschriebene Leiterstruktur 12g kann z. B. auch in Verbindung mit Abschlussstrukturen eingesetzt werden, wie diese bereits mit Bezug auf die vorangegangenen Ausführungsbeispiele beschrieben wurden.

Zusammenfassend lassen sich Aufbau, Funktionsweise und Vorteile der vorstehend beispielhaft beschriebenen Antennen bzw. der vorstehend beispielhaft beschriebenen, zum Aufbau derartiger Antennen verwendbaren Abschlussstrukturen wie folgt skizzieren:
- Eine erste Hauptkomponente der Antenne wird durch die koaxiale Leiterstruktur gebildet, bei welcher es sich z. B. um ein biegsames oder semirigides Kabel, oder auch um eine starre Struktur handeln kann, die an ihrem zweiten Ende (Abschlussende) mit der Abschlussstruktur verbunden ist.
- Eine zweite Hauptkomponente der Antenne wird durch die Abschlussstruktur gebildet, welche die "koaxiale Struktur unterbricht" und somit z. B. im Sendebetrieb die Erzeugung zurücklaufender Oberflächenwellen auf der Außenseite des Mantelleiters induziert. Insbesondere wird hierfür eine "kapazitive Kopplung" des am Ende des Innenleiters ankommenden Antennensignals, über Innenleiteranschlussfläche, Durchkontaktierung(en) und Koppelleiterfläche laufend, an den Mantelleiter realisiert. Diese kapazitive Kopplung ist hierbei konkret durch die "Überlappung" zwischen dem dritten Bereich (Koppelleiterfläche) und dem ersten Bereich (Innenleiteranschlussfläche) realisiert.
- Eine optional vorgesehene, z. B. durch einen oder mehrere Ferritringe gebildete Oberflächenwellendämpfungseinrichtung an einer Stelle im Längsverlauf der Leiterstruktur begrenzt die zum Senden/Empfangen wirksame Antennenlänge (Sende/Empfangsabschnitt LSW). Neben einer Einstellung dieser Antennenlänge beeinflusst die Position der Dämpfungseinrichtung, im Falle mehrerer voneinander beabstandeter Ferritringe insbesondere die Position des ersten (dem Abschlussende der Leiterstruktur am nächsten liegenden) Ferritringes, auch die Eigenschaften der Dämpfungseinrichtung und somit die Eigenschaften der zurücklaufenden Oberflächenwellen.
- Der Sende/Empfangsabschnitt (Länge LSW) kennzeichnet den Abschnitt der Oberflächenwellenausbreitung auf der Außenseite des Mantelleiters (koaxiale Abschirmung). Ohne Begrenzung würde sich der Sende/Empfangsabschnitt ausgehend vom Abschlussende praktisch so weit erstrecken, bis aufgrund von Leitungsverlusten kein Strom mehr messbar ist. Das Beispiel gemäß Fig. 12 zeigt exemplarisch wie die Länge LSW sehr einfach eingestellt werden kann. Für die Länge LSW kann z. B. vorgesehen sein: LSW(min) = LGP, und/oder LGP ≤ LSW ≤ 200 × λ, und/oder LSW(max) = 100 m.
- Im Allgemeinen vorteilhaft im Hinblick auf die gewünschte Erzeugung zurücklaufender Oberflächenwellen ist es, wenn eine kumulierte Gesamtlänge desjenigen "Pfades", der ausgehend vom Ende des Mantelleiters über den davon abstehenden Innenleiterabschnitt und weiter über die Innenleiteranschlussfläche, die Durchkontaktierung und die Koppelleiterfläche verläuft, zumindest annähernd eine "Viertelwellenlänge" eines im Antennenbetrieb verwendeten Antennensignals darstellt. Eine Trägerfrequenz des Antennensignals kann z. B. im Bereich von 500 bis 5000 MHz liegen.
- Die konkrete Position von optional vorgesehenen mehreren Ferritringen, insbesondere die Position des ersten Ferritringes beeinflusst auch stark die Impedanz der Antenne. Insofern kann eine Einstellbarkeit wenigstens eines, insbesondere wenigstens des ersten von mehreren Ferritringen vorteilhaft zur Impedanzeinstellung genutzt werden (z. B. möglichst nahe bei 50 Ω oder dem Wellenwiderstand der koaxialen Struktur).
- Bei geeigneter Geometrie der Antenne und entsprechender Betriebsweise (z. B. Trägerfrequenz der Antennensignale) lässt sich erreichen, dass der größte Anteil eines Sendesignals als Mantelwelle entlang des "Signalsende/Empfangsabschnittes" wandert, und nur vergleichsweise wenig Hochfrequenzenergie abgestrahlt wird ("coupled mode").
- Insbesondere bei Anordnung mehrerer Ferritringe zur Ausbildung der Oberflächenwellendämpfungseinrichtung kommt es zu einer sehr wirksamen Unterdrückung der Mantelwellen auf dem Rest (Signalleitungsabschnitt) der Leiterstruktur. Der Übergang zwischen den beiden vorgenannten Abschnitten wird durch die Position der Dämpfungseinrichtung im Verlauf der Leiterstruktur festgelegt. In dieser Hinsicht ist gemäß einer Weiterbildung vorgesehen, dass die Dämpfungseinrichtung insgesamt verschiebbar entlang der Leiterstruktur vorgesehen ist.
- Eine kumulierte Gesamtlänge desjenigen Pfades, der ausgehend vom Ende des Mantelleiters über den davon abstehenden Innenleiterabschnitt und weiter über die Innenleiteranschlussfläche, die Durchkontaktierung und die Koppelleiterfläche verläuft, lässt sich so wählen, dass in Kombination mit der (bevorzugt veränderbaren) Position des Ferritringes (bzw. bei mehreren Ferritringen z. B. des ersten Ferritringes) eine gewünschte Impedanz eingestellt wird, z. B. zur Erzielung einer möglichst hohen Rückflussdämpfung der Antenne.

Die Länge einer erfindungsgemäßen Antenne und die Längen der einzelnen erwähnten Abschnitte davon (Leiterstruktur, vom Mantelleiter abstehender Innenleiterabschnitt, Signalpfad der Innenleiteranschlussfläche, Durchkontaktierungslänge und Signalpfad der Koppelleiterfläche) können dem jeweiligen Anwendungsfall angepasst vorgesehen sein.

Da im Beispiel gemäß der Fig. 1 bis 4 keine Oberflächenwellendämpfungseinrichtung vorgesehen ist, kann die gesamte Leiterstruktur 12 sowohl als Signalleitungsabschnitt als auch als Signalsende/Empfangsabschnitt angesehen werden. Anders z. B. bei dem Beispiel gemäß Fig. 12, bei dem die Länge der Leiterstruktur 12g in einen Signalleitungsabschnitt der Länge LCON und einen Signalsende/Empfangsabschnitt der Länge LSW aufgeteilt wird.

Diese Längen können beispielhaft in jeweils folgenden Bereichen liegen: LCON im Bereich von 0,05 bis 1 m, Länge der Oberflächenwellendämpfungseinrichtung im Bereich von 0,05 bis 0,5 m, LSW im Bereich von 0,2 bis 10 m, und G+LTL1+(Länge der Durchkontaktierung)+LTL2, bevorzugt abhängig von der Wellenlänge als Viertelwellenlänge gewählt, im Bereich von 0,03 bis 0,15 m.

Falls mehrere Ferritringe vorgesehen sind, so kann ein gegenseitiger Abstand (lichte Weite) zwischen den Ferritringen z. B. im Bereich von 5 bis 20 mm liegen.

Die zur Ausbildung der Dämpfungseinrichtung verwendeten Ferritringe, im Beispiel von Fig. 12 der Ferritring 34g, sollten auf die Querausdehnung bzw. den Durchmesser der Leiterstruktur (einschließlich ggf. vorhandener Außenschicht (Isoliermantel)) abgestimmt sein, bevorzugt mit einem Ringspalt zwischen der Leiterstruktur und dem Innenumfang des Ferritringes von bevorzugt weniger als 3 mm. In einer Ausführungsform ist die Impedanz jedes Ferritringes bei der Betriebsfrequenz der Antenne größer als 100 Ω. Geeignete Ferritringe sind kommerziell erhältlich, beispielsweise unter der Bezeichnung "WE-AFB EMI Suppression Axial Ferrite Bead" von der Fa. Würth Elektronik, 74638 Waldenburg, Deutschland.

In einer vorteilhaften Ausführungsform der erfindungsgemäßen Antenne ist vorgesehen, dass die Dämpfungseinrichtung mehrere derartige "Diskontinuitäten", wie z. B. Ferritringe, aufweist, die sich in ihrer Impedanz voneinander unterscheiden. Dies ermöglicht z. B. insbesondere eine Wellendämpfung mit minimiertem Anteil an Reflexion der an der Dämpfungseinrichtung einlaufenden Wanderwellen.

Abweichend von dem in Fig. 12 dargestellten Ausführungsbeispiel könnten weitere Diskontinuitäten bzw. Ferritringe der beschriebenen Art im Verlauf der Leiterstruktur 12g bzw. des Signalsende/Empfangsabschnittes LSW angeordnet sein, um damit z. B. eine gewünschte "Wellenformung" zu realisieren.

In vielen Anwendungsfällen ist interessant, den zum Senden/Empfangen vorgesehenen Signalsende/Empfangsabschnitt (vgl. z. B. LSW in Fig. 12) der Antenne entlang eines bestimmten Pfades an oder in einer technischen Einrichtung (z. B. Schrank oder Regal) verlaufen zu lassen, wobei dieser Pfad z. B. geradlinig, abweichend davon aber auch entlang komplexerer Wege verlaufen kann.

Zusammenfassend können mit den beschriebenen Ausführungsbeispielen Antennen mit z. B. folgenden Vorteilen realisiert werden:
- Aufbau des elektromagnetischen Feldes im Wesentlichen kurzreichweitig um die Antenne herum, aber relativ wenig Abstrahlung.
- Gute Kontrolle über das Feld hinsichtlich Reichweite, Feldstärke, Reflexionen, Leitungsverlusten; keine "Erfassungslücken" entlang der Antenne.
- Leichte Abstimmbarkeit auf eine gewünschte Antennenimpedanz (z. B. 50 Ω) in unterschiedlichen Umgebungen und Frequenzbändern.
- Antenne kann sehr einfach gefertigt werden, sei es z. B. aus flexiblen oder aus starren Koaxialleitungen, nach dem ein und demselben Prinzip.
- Antenne kann bei allen betriebsmäßig vorgesehenen Frequenzen in einem "coupled mode" arbeiten. Ein Abstrahlungs("radiating mode")-Anteil kann gering gehalten werden.
- Antenne kann wenigstens teilweise aus zugleich anderweitig genutzten Strukturen, insbesondere aus massiven oder hohlen metallischen Strukturen zur Ausbildung des benötigten Mantelleiters oder des Innenleiters gefertigt werden. Lediglich beispielhaft sei angemerkt, dass geeignete metallische Strukturen z. B. bei Kleiderstangen, Blindenstöcken oder mechanischen Streben bzw. Profilträgern (z. B. von Regalen, Warenpräsentationsständern etc.) im Rahmen der Erfindung nutzbar sein können.
- Antenne kann auch bei hoher Sendeleistung und in der Nähe von metallischen Flächen so betrieben werden, dass keine starken Reflexionen an diesen Flächen hervorgerufen werden. Betrieb wenige mm von metallischen Flächen ermöglicht.
- Robuster, unempfindlicher Betrieb möglich, z. B. so, dass die Impedanz auch bei Anordnung der Antenne in der Nähe von Metall nicht stark verändert wird (z. B. gute Funktion sowohl in einem offenen als auch geschlossenen Metallschrank.
- Es lassen sich in einfacher Weise auch flächige und räumliche Antennenstrukturen ausbilden (z. B. unter Tisch- oder Arbeitsplatten, an Tunneln oder Türen zu Warenlagern, Verlegung in Gebäudeböden (z. B. Estrich etc.), oder in Fahrzeugen).
- Antenne ist leicht zu montieren bzw. in Objekte der genannten Art (insbesondere z. B. Schräke, Regale oder dergleichen) zu integrieren.

## Patentansprüche

1. Antenne (10) für Nahbereichsanwendungen, insbesondere RFID-Anwendungen, umfassend:
- eine langgestreckte zweipolige Leiterstruktur (12) mit einem Innenleiter (30) und einem diesen koaxial umgebenden Mantelleiter (32),
- eine an einem Längsende der Leiterstruktur (12) angeordnete Abschlussstruktur (14),
wobei die Abschlussstruktur (14) umfasst:
- eine elektrisch isolierende Trägerplatte (16) mit einer Oberseite und einer Unterseite,
- eine an der Oberseite der Trägerplatte (16) über einen ersten Bereich der Trägerplatte (16) sich erstreckende und mit dem Mantelleiter (32) verbundene elektrisch leitfähige Mantelleiteranschlussfläche (22),
- eine an der Oberseite der Trägerplatte (16) über einen vom ersten Bereich der Trägerplatte (16) beabstandeten zweiten Bereich der Trägerplatte (16) sich erstreckende und mit dem Innenleiter (30) verbundene elektrisch leitfähige Innenleiteranschlussfläche (24),
- eine an der Unterseite der Trägerplatte (16) über einen dritten Bereich der Trägerplatte (16) sich erstreckende elektrisch leitfähige Koppelleiterfläche (26), wobei der dritte Bereich den ersten Bereich und den zweiten Bereich der Trägerplatte (16) jeweils wenigstens teilweise überlappt und zwischen der Koppelleiterfläche (26) und der Mantelleiteranschlussfläche (22) eine kapazitive Kopplung realisiert ist,
- wenigstens eine Durchkontaktierung (28), welche die Innenleiteranschlussfläche (24) an der Oberseite der Trägerplatte (16) mit der Koppelleiterfläche (26) an der Unterseite der Trägerplatte (16) verbindet.

2. Antenne (10) nach Anspruch 1, wobei die Trägerplatte (16) eine langgestreckte Form, insbesondere eine rechteckige Form, besitzt.

3. Antenne (10) nach Anspruch 2, wobei der erste Bereich wenigstens zum Teil benachbart einem ersten Längsende der Trägerplatte (16) vorgesehen ist.

4. Antenne (10) nach Anspruch 2 oder 3, wobei der zweite Bereich wenigstens zum Teil benachbart einem zweiten Längsende der Trägerplatte (16) vorgesehen ist.

5. Antenne (10) nach Anspruch 2 oder 3, wobei der zweite Bereich wenigstens einen streifenförmig in einer Längsrichtung der Trägerplatte (16) verlaufenden Streifenabschnitt aufweist.

6. Antenne (10) nach Anspruch 2 oder 3, wobei der dritte Bereich wenigstens einen streifenförmig in einer Längsrichtung der Trägerplatte (16) verlaufenden Streifenabschnitt aufweist.

7. Antenne (10) nach Anspruch 5 oder 6, wobei wenigstens ein Streifenabschnitt über die Längsrichtung der Trägerplatte (16) betrachtet eine uneinheitliche Breite besitzt.

8. Antenne (10) nach einem der vorangehenden Ansprüche, wobei der dritte Bereich zumindest einen Großteil des zweiten Bereiches überlappt.

9. Antenne (10) nach einem der vorangehenden Ansprüche, wobei der Mantelleiter über einen in seiner Längsrichtung langgestreckten Kontaktbereich mit der Mantelleiteranschlussfläche verbunden ist.

10. Antenne (10) nach Anspruch 9, wobei im Kontaktbereich quer zu der Längsrichtung des Mantelleiters (32) betrachtet eine Ausdehnung der Mantelleiteranschlussfläche (22) größer als eine Ausdehnung des Mantelleiters (32) ist.

11. Antenne (10) nach einem der vorangehenden Ansprüche, wobei die Innenleiteranschlussfläche (24) einen mit dem Innenleiter (30) verbundenen Anschlussabschnitt und sich daran anschließend mehrere streifenförmige Verzweigungsabschnitte besitzt, die an ihren jeweiligen Enden über jeweils wenigstens eine Durchkontaktierung (28) mit der Koppelleiterfläche (26) verbunden sind.

12. Antenne (10) nach einem der vorangehenden Ansprüche, wobei die Koppelleiterfläche (26) einen mit der wenigstens einen Durchkontaktierung (28) verbundenen Anschlussabschnitt und sich daran anschließend mehrere streifenförmige Verzweigungsabschnitte besitzt, die zu voneinander separaten Bereichen einer Überlappung mit der Mantelleiteranschlussfläche (22) verlaufen.

13. Verwendung einer Antenne (10) nach einem der Ansprüche 1 bis 12 als eine Wanderwellenantenne in einem "coupled mode".

14. Verwendung einer Antenne (10) nach einem der Ansprüche 1 bis 12 für eine Kommunikation mit wenigstens einem in der Umgebung der Antenne (10) befindlichen Transponder und/oder für eine Kommunikation mit wenigstens einer in der Umgebung der Antenne (10) befindlichen Komponente eines Computernetzwerkes.

15. Verwendung einer Antenne (10) nach einem der Ansprüche 1 bis 12 für eine Übertragung von Energie zwischen der Antenne (10) und wenigstens einer in der Umgebung der Antenne (10) befindlichen Einrichtung.

## Claims

1. An antenna (10) for short-range applications, particularly RFID applications, comprising:
- an elongated bipolar conductor structure (12) with an inner conductor (30) and a sheath conductor (32) coaxially surrounding the same,
- a terminal structure (14) arranged at a longitudinal end of the conductor structure (12),
wherein the terminal structure (14) comprises:
- an electrically insulating carrier plate (16) having an upper side and an underside,
- an electrically conductive sheath conductor connection surface (22) extending on the upper side of the carrier plate (16) over a first region of the carrier plate (16) and connected to the sheath conductor (32),
- an electrically conductive inner conductor connection surface (24) extending on the upper side of the carrier plate (16) over a second region of the carrier plate (16) spaced from the first region of the carrier plate (16) and connected to the inner conductor (30),
- an electrically conductive coupling conductor surface (26) extending on the underside of the carrier plate (16) over a third region of the carrier plate (16), wherein the third region at least partially overlaps the first region and the second region of the carrier plate (16) in each case and a capacitive coupling is realized between the coupling conductor surface (26) and the sheath conductor connection surface (22),
- at least one plated through-hole (28), which connects the inner conductor connection surface (24) on the upper side of the carrier plate (16) to the coupling conductor surface (26) on the underside of the carrier plate (16).

2. The antenna (10) according to Claim 1, wherein the carrier plate (16) has an elongated shape, particularly a rectangular shape.

3. The antenna (10) according to Claim 2, wherein the first region is provided at least partially adjacent to a first longitudinal end of the carrier plate (16).

4. The antenna (10) according to Claim 2 or 3, wherein the second region is provided at least partially adjacent to a second longitudinal end of the carrier plate (16).

5. The antenna (10) according to Claim 2 or 3, wherein the second region has at least one strip section running in a strip-shaped manner in a longitudinal direction of the carrier plate (16).

6. The antenna (10) according to Claim 2 or 3, wherein the third region has at least one strip section running in a strip-shaped manner in a longitudinal direction of the carrier plate (16).

7. The antenna (10) according to Claim 5 or 6, wherein at least one strip section has a non-uniform width, as viewed over the longitudinal direction of the carrier plate (16).

8. The antenna (10) according to one of the preceding claims, wherein the third region overlaps at least a majority of the second region.

9. The antenna (10) according to one of the preceding claims, wherein the sheath conductor is connected via a contact region, elongated in the longitudinal direction thereof, to the sheath conductor connection surface.

10. The antenna (10) according to Claim 9, wherein an extent of the sheath conductor connection surface (22) is larger than an extent of the sheath conductor (32), viewed transversely to the longitudinal direction of the sheath conductor (32).

11. The antenna (10) according to one of the preceding claims, wherein the inner conductor connection surface (24) has a connection section connected to the inner conductor (30) and a plurality of strip-shaped branched sections adjoining the same, which are connected at the respective ends thereof, by means of at least one plated through-hole (28), to the coupling conductor surface (26).

12. The antenna (10) according to one of the preceding claims, wherein the coupling conductor surface (26) has a connection section connected to the at least one plated through-hole (28) and a plurality of strip-shaped branched sections adjoining the same, which run to mutually separate regions of an overlap with the sheath conductor connection surface (22).

13. A use of an antenna (10) according to one of Claims 1 to 12 as a travelling-wave antenna in a "coupled mode".

14. A use of an antenna (10) according to one of Claims 1 to 12, for communication with at least one transponder located in the surroundings of the antenna (10) and/or for communication with at least one component of a computer network located in the surroundings of the antenna (10).

15. A use of an antenna (10) according to one of Claims 1 to 12, for transmitting energy between the antenna (10) and at least one device located in the surroundings of the antenna (10).

## Revendications

1. Antenne (10) pour applications en champ proche, en particulier des applications RFID, comprenant :
- une structure de conducteur bipolaire oblongue (12) avec un conducteur interne (30) et un conducteur de gainage (32) entourant celui-ci coaxialement,
- une structure terminale (14) disposée au niveau d'une extrémité longitudinale de la structure de conducteur (12),
dans laquelle la structure terminale (14) comprend :
- une plaque de support d'isolation électrique (16) avec une face supérieure et une face inférieure,
- une surface de raccordement de conducteur de gainage électroconductrice (22) s'étendant au niveau de la face supérieure de la plaque de support (16) sur une première zone de la plaque de support (16) et reliée au conducteur de gainage (32),
- une surface de raccordement de conducteur interne électroconductrice (24) s'étendant au niveau de la face supérieure de la plaque de support (16) sur une deuxième zone de la plaque de support (16) espacée par rapport à la première zone de la plaque de support (16) et reliée au conducteur interne (30),
- une surface de conducteur de couplage électroconductrice (26) s'étendant au niveau de la face inférieure de la plaque de support (16) sur une troisième zone de la plaque de support (16), dans laquelle la troisième zone chevauche au moins partiellement respectivement la première zone et la deuxième zone de la plaque de support (16) et un couplage capacitif est réalisé entre la surface de conducteur de couplage (26) et la surface de raccordement de conducteur de gainage (22),
- au moins une connexion transversale (28) qui relie la surface de raccordement de conducteur interne (24) au niveau de la face supérieure de la plaque de support (16) à la surface de conducteur de couplage (26) au niveau de la face inférieure de la plaque de support (16).

2. Antenne (10) selon la revendication 1, dans laquelle la plaque de support (16) possède une forme oblongue, en particulier une forme rectangulaire.

3. Antenne (10) selon la revendication 2, dans laquelle la première zone est prévue au moins en partie au voisinage d'une première extrémité longitudinale de la plaque de support (16).

4. Antenne (10) selon la revendication 2 ou 3, dans laquelle la deuxième zone est prévue au moins en partie au voisinage d'une deuxième extrémité longitudinale de la plaque de support (16).

5. Antenne (10) selon la revendication 2 ou 3, dans laquelle la deuxième zone présente au moins une partie en bande s'étendant en forme de bande dans une direction longitudinale de la plaque de support (16).

6. Antenne (10) selon la revendication 2 ou 3, dans laquelle la troisième zone présente au moins une partie en bande s'étendant en forme de bande dans une direction longitudinale de la plaque de support (16).

7. Antenne (10) selon la revendication 5 ou 6, dans laquelle au moins une partie en bande, en vue en direction longitudinale de la plaque de support (16), possède une largeur non uniforme.

8. Antenne (10) selon l'une des revendications précédentes, dans laquelle la troisième zone chevauche au moins une majeure partie de la deuxième zone.

9. Antenne (10) selon l'une des revendications précédentes, dans laquelle le conducteur de gainage est relié via une zone de contact oblongue dans sa direction longitudinale à la surface de raccordement de conducteur de gainage.

10. Antenne (10) selon la revendication 9, dans laquelle, dans la zone de contact, en vue transversalement à la direction longitudinale du conducteur de gainage (32), une étendue de la surface de raccordement de conducteur de gainage (22) est supérieure à une étendue du conducteur de gainage (32).

11. Antenne (10) selon l'une des revendications précédentes, dans laquelle la surface de raccordement de conducteur interne (24) possède une partie de raccordement reliée au conducteur interne (30) et plusieurs parties de ramification en forme de bande en jonction avec celle-ci, lesquelles sont reliées à leurs extrémités respectives via respectivement au moins une connexion transversale (28) à la surface de conducteur de couplage (26).

12. Antenne (10) selon l'une des revendications précédentes, dans laquelle la surface de conducteur de couplage (26) possède une partie de raccordement reliée à l'au moins une connexion transversale (28) et plusieurs parties de ramification en forme de bande en jonction avec celle-ci, lesquelles s'étendent vers des zones séparées les unes de autres d'un chevauchement avec la surface de raccordement de conducteur de gainage (22).

13. Utilisation d'une antenne (10) selon l'une des revendications 1 à 12 en tant qu'une antenne à ondes progressives dans un « coupled mode ».

14. Utilisation d'une antenne (10) selon l'une des revendications 1 à 12 pour une communication avec au moins un transpondeur se trouvant dans l'environnement de l'antenne (10) et/ou pour une communication avec au moins un composant d'un réseau informatique se trouvant dans l'environnement de l'antenne (10).

15. Utilisation d'une antenne (10) selon l'une des revendications 1 à 12 pour une transmission d'énergie entre l'antenne (10) et au moins un dispositif se trouvant dans l'environnement de l'antenne (10).
